# EUROPEAN PATENT SPECIFICATION

(11) **EP 4 196 344 B1**
(45) Date of publication and mention of the grant of the patent: **27.12.2023**
(21) Application number: 22740712.9
(22) Date of filing: 10.05.2022
(51) Int. Cl.: B32B 1/00, B32B 5/00, B32B 5/02, B32B 7/12, B32B 27/30, B32B 27/32, B32B 27/38

(54) **COMPOSITE TEXTILES AND ARTICLES OF FOOTWEAR FORMED THEREFROM**
VERBUNDSTOFFE UND DARAUS HERGESTELLTE SCHUHARTIKEL
TEXTILES COMPOSITES ET ARTICLES CHAUSSANTS FORMÉS À PARTIR DE CEUX-CI

(30) Priority: 10.06.2021 US 202163209190 P
(43) Date of publication of application: 21.06.2023
(60) Divisional application: 23204198.8
(73) Proprietor: Nike Innovate C.V., Beaverton, Oregon 97005 (US)
(72) Inventor: CHOU, Chih-Yin, Taichung, 406 (TW); DUA, Bhupesh, Beaverton, Oregon 97005 (US); FARR, Isaac, Beaverton, Oregon 97005 (US); KUO, Chun-Wei, Taichung, 406 (TW); WRIGHT, Zachary C., Beaverton, Oregon 97005 (US)
(74) Representative: Abel & Imray LLP
(86) International application number: PCT/US2022/072223
(87) International publication number: WO 2022/261590

(56) References cited:
- EP-A1- 2 602 385
- EP-A1- 3 986 196
- EP-B1- 3 764 830
- EP-B1- 3 773 043
- WO-A1-2010/008371
- WO-A1-2013/059549
- WO-A1-2021/016039
- US-A1- 2002 010 265
- US-A1- 2004 166 752
- US-A1- 2010 314 026
- US-A1- 2021 022 445
- US-A1- 2022 185 954

## Description

### BACKGROUND

The design and manufacture of footwear and sporting equipment involves a variety of factors from the aesthetic aspects, to the comfort and feel, to the performance and durability. While design and fashion may be rapidly changing, the demand for increasing performance in the footwear and sporting equipment market is unchanging. In addition, the market has shifted to demand lower-cost and recyclable materials still capable of meeting increasing performance demands. To balance these demands, designers of footwear and sporting equipment employ a variety of materials and designs for the various components. US 2021/0022445 A1 discloses a synthetic leather material comprising a synthetic leather polymeric coating layer affixed to a synthetic leather textile layer; wherein the synthetic leather polymeric coating layer comprises a synthetic leather polymeric coating composition; wherein the synthetic leather textile layer comprises a fiber or yarn, wherein the fiber or yarn comprise a fiber/yarn polymeric composition; and wherein the synthetic leather polymeric composition or the fiber/yarn polymeric composition or both comprise a polyolefin resin composition. US 2004/0166752 A1 discloses a polyolefin woven fabric extrusion coating with superior soft tactile characteristic comprising a polyolefin elastomer and a thermoplastic vulcanizate. The end uses of the coated woven materials disclosed in US 2004/0166752 A1 include industrial covers, such as covering of trucks, flexible sign facing, banner fabrics or geomembranes.

### BRIEF DESCRIPTION OF THE DRAWINGS

Further aspects of the present disclosure will be readily appreciated upon review of the detailed description, described below, when taken in conjunction with the accompanying drawings.
FIGS. 1A-1F depict an exemplary article of athletic footwear. FIG. 1A is a lateral side perspective view of the exemplary article of athletic footwear. FIG. 1B is a lateral side elevational view of the exemplary article of athletic footwear. FIG. 1C is a medial side elevational view of the exemplary article of athletic footwear. FIG. 1D is a top view of the exemplary article of athletic footwear. FIG. 1E is a front view of the exemplary article of athletic footwear. FIG. 1F is a rear view of the exemplary article of athletic footwear.
FIGS. 2A-2B show cross-sectional views of disclosed composite textiles. FIG. 2A is a cross-sectional view of a disclosed composite textile. FIG. 2B is a cross-sectional view of a disclosed composite textile.
FIGS. 3A-3B show cross-sectional views of disclosed composite textiles. FIG. 3A is a cross-sectional view of a disclosed composite textile. FIG. 3B is a cross-sectional view of a disclosed composite textile.

### DETAILED DESCRIPTION

State of the art specialty polymers for footwear and sporting equipment include polymers such as polyurethane and polyamide polymers, but there remains a need for lower-cost alternatives to these performance polymers, especially lower-cost alternatives that are recyclable and readily processable. Alternatives such as polyolefins, while cost-effective, have traditionally suffered from poor mechanical properties and poor surfaces and surface energies for bonding. New designs and materials are needed. In particular, there remains a need for improved polymer resins for making components of footwear and sporting equipment that are resistant to creasing and bagging, resistant to stress whitening or cracking when flexed under cold conditions, resistant to abrasion, and that are capable of adequate bonding for footwear and other athletic equipment applications.

The present disclosure provides for composite textiles for an article of apparel, sporting equipment, or footwear that include a coating layer that is compatible with textiles such as those comprising polyolefins. The coating layer, as well as the precursor coating layer composition, the coating mixture, or resin composition used to form the coating layer, include a mixture of a polyolefin resin and a thermoplastic vulcanizate (TPV). In an embodiment, the composite textile can be a synthetic leather. In this regard, these composite textiles, including synthetic leathers, are believed to possess several advantages, particularly for use in the manufacture of articles, such as articles of footwear or articles of clothing. It is believed that the use of the coating layer in the disclosed composite textiles can promote better bonding between other components or materials used in articles, such as articles of footwear or articles of clothing, while resisting or preventing creasing and bagging. This allows the use of cost-effective materials such as polyolefins in the composite textiles that have adequate physical and mechanical properties, while also having sufficient chemical bonding properties.

Conventional synthetic leathers typically include a polyurethane-based or polyvinylchloride-based coating layer. In contrast, the coating layer of the composite textiles (including synthetic leathers) of the present disclosure comprises a coating mixture including a polyolefin resin and thermoplastic vulcanizate (TPV). It has been found that the combination of a polyolefin resin and a TPV provides a coating layer that bonds well to the textile layer, remains bonded to the textile layer during wear, reducing or preventing creasing or bagging of the composite textile, while still maintaining high bonding scores when bonding the composite textile to polyolefin materials such as polyolefin footwear components. Without being bound be theory, it is believed that using a coating mixture having a high level of elongation that is close to or exceeds the level of elongation of the textile layer reduces or prevents creasing or bagging of the composite textile. In some aspects, the coating layer of the composite textile disclosed herein has a level of elongation that is at least 80 percent (e.g., 80 to 100 percent), or at least 90 percent (e.g., 90 to 100 percent), or at least 100 percent of the level of elongation of the textile layer without the coating layer present.

The present invention provides a composite textile for an article of apparel, sporting equipment, or footwear as defined in claim 1, an article of apparel, sporting equipment, or footwear as defined in claim 12 and a method of manufacturing a composite textile for an article of apparel, sporting equipment, or footwear as defined in claim 13.

In the composite textile, the second side of the coating layer and the first side of the textile layer are directly or indirectly bonded to each other. In some aspects, the first side of the coating layer comprises the coating mixture as disclosed herein, and an outer surface of the composite textile (i.e., the first side of the coating layer) is defined by the coating mixture. In other aspects, the outer surface of the composite textile is defined by a protective or decorative coating bonded to the coating mixture. The composite textile can be incorporated into an article of apparel, sporting equipment, or footwear (e.g., an upper).

The present disclosure also provides for a method of manufacturing an article of footwear, comprising: attaching an upper to a sole structure, wherein the upper comprises a composite textile as described above and herein.

As defined in claim 1, the present invention provides for composite textile for an article of apparel, sporting equipment, or footwear comprising:
a coating layer including a coating mixture, the coating layer having a first side and a second side opposing the first side, the coating mixture comprising a polyolefin resin and a thermoplastic vulcanizate (TPV), wherein the TPV comprises a cured rubber dispersed in a thermoplastic resin, wherein the coating mixture comprises 80 weight percent to 50 weight percent of the polyolefin resin and 5 weight percent to 45 weight percent of the TPV; and
a textile layer including a first textile, the texture layer having a first side and a second side opposing the first side;
wherein, in the composite textile, the second side of the coating layer and the first side of the textile layer are directly bonded to each other or are indirectly bonded to each other *via* one or more intermediate layers;
wherein the first textile of the textile layer is a non-woven textile and/or wherein the composite textile is a synthetic leather.

The polyolefin resin of the coating mixture can include an alpha-olefin polymer.

The alpha-olefin polymer can be an alpha-olefin copolymer.

The alpha-olefin copolymer can be a polypropylene copolymer.

The polyolefin resin can include crystalline regions dispersed in an amorphous matrix.

The polyolefin resin can be miscible with polypropylene.

The thermoplastic resin of the TPV can include a thermoplastic polyolefin resin.

The cured rubber of the TPV can include a cured polyolefin rubber.

The TPV can be substantially free of hygroscopic fillers.

The TPV can be substantially free of fillers.

The TPV can be substantially free of pigments.

The TPV can comprise one or more fillers.

The TPV can comprise one or more pigments.

The coating mixture can comprise one or more fillers, or one or more pigments, or both one or more fillers and one or more pigments.

The coating mixture can be substantially free of fillers, or is substantially free of pigments, or is substantially free of both fillers and pigments.

The coating mixture comprises 80 weight percent to 50 weight percent of a polyolefin resin and optionally about 5 weight percent to about 35 weight percent of a thermoplastic vulcanizate (TPV).

A thickness of the coating layer can be about 100-400 microns, or about 300-400 microns.

The coating layer can include a film comprising the coating mixture.

The film can be an extruded film or a co-extruded film.

The coating mixture can be the solidified product of a liquid polymeric material.

The coating layer can have an elongation of at least 40 percent to 100 percent in a first direction and in a second direction transverse to the first direction.

The coating layer can have a machine direction in which it is bonded to the first textile, and a transverse direction which is transverse to the machine direction, and the elongation of the coating layer can be about 40 percent to about 100 percent, or about 50 percent to about 90 percent in the machine direction, and about 50 percent to about 100 percent, or about 60 percent to about 80 percent in the transverse direction.

The coating layer can have a residual strain of less than 4 percent, or less than 3 percent, at an applied strain of 10 percent.

The coating mixture can have a Young's modulus of about 10 to about 100 MPa, or of about 50 to 70 MPa.

A melting temperature of the coating mixture can be greater than 100 degrees C, or greater than 70 degrees C, or greater than 60 degrees C.

A Vicat softening temperature of the coating mixture can be greater than 60 degrees C, or greater than 70 degrees C, or greater than 100 degrees C.

A glass transition temperature of the coating mixture can be less than 20 degrees C.

A melt flow index of the coating mixture can be about 0.5 to about 25, or is about 2 to 15 according to ASTM D1238-13 (conditions used 230° C/2.16 Kg).

A hardness of the coating mixture can be about 55 to 95 Shore A, or can be about 60 to about 80 Shore A.

A strain at yield of the coating mixture can be about 3 percent to about 5 percent, or about 3.5 percent to about 4.5 percent, or can be about 4 percent.

An elongation at break of the coating mixture can be greater than 100 percent, or greater than 250 percent, or greater than 500 percent, or can range from about 100 percent to about 750 percent.

A coefficient of friction of the coating mixture layer can be about 0.7 to about 2.0, or about 0.7 to about 1.5, or about 0.7 to about 1.0, as determined by ASTM D1894.

In one embodiment of the invention, the first textile of the textile layer can be a knit or woven textile, wherein the composite textile is a synthetic leather. In another embodiment of the invention, the first textile of the textile layer is a non-woven textile.

The non-woven textile can be a carded non-woven textile, a spun-bond non-woven textile, or a melt-blown non-woven textile.

The non-woven textile can be a spun-blown non-woven textile.

The first textile can comprise fibers or filaments comprising a thermoplastic material.

A polymeric component of the thermoplastic material comprised of all the polymers present in the thermoplastic material can comprise a polyolefin, or a polyamide, or a polyurethane, or a polyester, or a polyether polymer, or any combination thereof (optionally wherein the thermoplastic material comprising a polyester, optionally wherein the thermoplastic material is a polyester, optionally wherein the thermoplastic material comprises polyester made from polyester chips, optionally wherein the thermoplastic material is a made from polyester chips). The polymeric component can consist essentially of one or more polyesters.

The polymeric component can consist essentially of one or more polyolefins.

The one or more polyolefins can include or consist essentially of one or more polypropylenes.

A melting temperature of the thermoplastic material can be greater than 100 degrees C, or greater than 150 degrees C, or greater than 200 degrees C, or greater than 250 degrees C. The first textile can have a thickness of about 0.5 to 2.0 microns, or of about 0.7 to 1.5 microns, or of about 1.0 to 1.5 microns.

The first textile can have a machine direction in which it is bonded to the coating layer, and a transverse direction which is transverse to the machine direction, and the elongation of the first textile can be about 40 percent to about 100 percent, or about 50 percent to about 90 percent in the machine direction, and about 50 percent to about 120 percent, or about 60 percent to about 100 percent, or about 60 percent to about 80 percent in the transverse direction.

The first textile can have a residual strain of less than 20 percent, or less than 15 percent in the machine direction, and a residual strain of less than 65 percent or less than 60 percent or less than 50 percent in the transverse direction, in a cyclic test with a maximum load of 50N.

A thickness of the composite textile can be about 0.8 millimeters to about 2.5 millimeters, or about 0.9 millimeters to about 2.2 millimeters, or about 1 millimeter to about 2 millimeters, or about 1.3 millimeters to about 1.5 millimeters.

A weight of the composite textile can be about 400 to about 1,000, or about 450 to about 900, or about 500 to about 700 grams per square meter.

A tensile strength in the length direction of the composite textile can be about 25 to about 40, or about 30 to about 35 kilograms per 2.54 centimeters.

A tensile strength in the width direction of the composite textile can be about 25 to about 40, or about 30 to about 35 kilograms per 2.54 centimeters.

An elongation in the length direction of the composite textile can be about 30 to about 100, or about 40 to about 90 percent.

An elongation in the width direction of the composite textile can be about 50 to about 140, or about 60 to about 120 percent.

The composite textile can have a Mullen burst score in the range of 15 to 25, or of 10 to 22, as determined according to ASTM D 3786.

The composite textile can include a hot melt adhesive layer having a first side and a second side opposing the first side, the second side of the coating layer can be bonded directly to the first side of the hot melt adhesive layer, and the second side of the hot melt adhesive layer can be bonded directly to the first side of the textile layer.

A melting temperature of the hot melt adhesive layer can be at least 10 degrees C below, optionally at least 20 degrees C below a Vicat softening temperature of the coating mixture.

A melting temperature of the hot melt adhesive can be at least 10 degrees C below, optionally at least 20 degrees C below a Vicat softening temperature of the thermoplastic material of the textile.

The first side of the coating layer can be an outer layer of the composite textile.

The first side of the coating layer can be textured.

In one embodiment of the present invention, the composite textile is a synthetic leather.

As defined in claim 12, the present invention provides for an article of apparel, sporting equipment, or footwear comprising a composite textile as described above.

The article of footwear can comprise an upper including the composite textile.

Disclosed herein a method of manufacturing an article of footwear, comprising:
attaching an upper to a sole structure, wherein the upper comprises a composite textileas described above.

As defined in claim 13, the present invention provides for a method of manufacturing a composite textile for an article of apparel, sporting equipment, or footwear, the method comprising:
bonding a coating layer to a textile layer to form the composite textile;
wherein the coating layer has a first side and a second side opposing the first side, the textile layer has a first side and a second side opposing the first side, and wherein the second side of the coating layer and the first side of the textile layer are bonded directly to each other or are indirectly bonded to each other via one or more intermediate layers;
wherein the first textile of the textile layer is a non-woven textile and/or wherein the composite textile is a synthetic leather; and
wherein the coating mixture comprises a polyolefin resin and a thermoplastic vulcanizate (TPV), wherein the coating mixture comprises 80 weight percent to 50 weight percent of the polyolefin resin and 5 weight percent to 45 weight percent of the TPV, wherein the TPV comprises a cured rubber dispersed in a thermoplastic resin.

The first coating layer can include a film comprising the coating mixture, and the step of bonding the coating layer to the textile layer can comprise disposing the film on the textile, and applying heat and pressure to the combination of the film and the textile.

The step of bonding the coating layer to the textile layer can comprise applying a liquid coating composition to the textile, and solidifying the liquid coating composition, thereby forming the coating layer comprising the coating mixture.

The liquid coating composition can comprise a dispersion of the polyolefin and the TPV in a liquid dispersant.

The method can further comprise a step of applying a texture to first side of the coating layer of the composite textile.

The step of applying the texture can comprise imparting the texture using a textured roller or a textured release paper.

The composite textile is a composite textile as described above.

The term "providing," as used herein and as recited in the claims, is not intended to require any particular delivery or receipt of the provided item. Rather, the term "providing" is merely used to recite items that will be referred to in subsequent elements of the claim(s), for purposes of clarity and ease of readability.

The terms "Material Sampling Procedure", "Plaque Sampling Procedure", "Cold Ross Flex Test", "ASTM D 5963-97a", "Differential Scanning Calorimeter (DSC) Test" as well as others are used herein to refer to the respective sampling procedures and test methodologies described in the Property Analysis and Characterization Procedure section. These sampling procedures and test methodologies characterize the properties of the recited materials, films, articles and components, and are not required to be performed as active steps in the claims.

The term "about," as used herein, can include traditional rounding according to significant figures of the numerical value. In some aspects, the term about is used herein to mean a deviation of 10%, 5%, 2.5%, 1%, 0.5%, 0.1 %, 0.01 %, or less from the specified value.

The articles "a" and "an," as used herein, mean one or more when applied to any feature in aspects of the present disclosure described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

As described above, the present disclosure provides for composite textiles that include the coating layer. The coating layer includes a coating mixture that includes a polyolefin resin and a TPV. The coating layer includes a first side and a second side that opposes the first side. The composite textile also includes a textile layer that includes a first textile (e.g., a polyester based textile). The textile layer has a first side and a second side opposing the first side. The composite textile is formed by directly bonding the second side of the coating layer and the first side of the textile layer to each other, or indirectly bonding to each other via one or more intermediate layers. The polyolefin resin can include a polyolefin polymer or a polyolefin copolymer (e.g., an alternating, random, block, or graft polyolefin copolymers). The polyolefin polymer or copolymer can be an alpha-olefin polymer or alpha-olefin copolymer (e.g., polypropylene copolymer), where the alpha-olefin includes a double bond at the alpha or primary position. In aspects, the polyolefin resin can include crystalline regions dispersed in an amorphous matrix of the polymer or copolymer and can optionally be miscible with polypropylene. The polyolefin resin can be a thermoplastic polyolefin resin.

As used herein, a thermoplastic vulcanizate (TPV) is understood to refer to a class of thermoplastic elastomers. TPVs include particles of an at least partially crosslinked (e.g., Vulcanized) elastomer (rubber) phase finely dispersed in a continuous phase comprising a thermoplastic resin. Optionally, the thermoplastic resin can include one or more thermoplastic polyolefins. Typically, TPVs are prepared using a dynamic crosslinking process involving crosslinking the elastomer phase while it is being melt-mixed with the thermoplastic resin phase at an elevated temperature. The thermoplastic resin phase can comprise one or more semicrystalline thermoplastic polymers, such as one or more semicrystalline thermoplastic polyolefin homopolymers or copolymers. In one aspect, the TPV comprises a crosslinked (cured) elastomer (e.g., a cured polyolefin rubber) dispersed in a thermoplastic resin (e.g., a thermoplastic polyolefin resin). In another aspect, the TPV can be free or substantially free of one or more of: hygroscopic fillers, fillers, and pigments. In yet another aspect, the TPV can include one or more of hygroscopic fillers, fillers, and pigments, depending upon the desired design and use of the composite textile.

An advantage of TPVs is that this class of thermoplastic elastomers retain properties of both the crosslinked elastomer phase and the thermoplastic resin phase. In particular, TPVs can have elastomeric properties provided by the crosslinked elastomer phase and thermoplastic processability provided by the thermoplastic resin phase, which make it possible to use processes which soften or melt the thermoplastic resin phase of the TPV, such as thermoforming, extrusion, and injection molding.

A variety of different types of elastomers can be used in the crosslinked elastomer phase of the TPV, including crosslinked polyolefin elastomers. A crosslinked polyolefin elastomer includes monomeric units derived from one or more olefins, such as ethylene, propylene, butene, pentene, hexene, or combinations thereof. In one aspect, the crosslinked polyolefin elastomer phase comprises a crosslinked polyethylene-co-polypropylene (PEP) elastomer. In another aspect, the crosslinked polyolefin elastomer phase comprises an ethylene, propylene and diene monomer (EPDM) terpolymer elastomer. The diene monomer of the EPDM can be a monomer derived from ethylidene norborene, dicyclopentadiene, vinyl norborene, or any combination thereof. In yet another aspect, the crosslinked elastomer phase can comprise a crosslinked styrenic elastomer, including a crosslinked styrenic block copolymer (SBC). Optionally, the styrenic block copolymer can include monomeric units derived from one or more olefins, such as polystyrene-block-poly(ethylene-co-propylene)-block-polystyrene (SEEPS). The crosslinked elastomer can be a sulfur-cured elastomer or can be a peroxide-cured elastomer.

In some aspects, when the thermoplastic resin of the TPV is a thermoplastic polyolefin resin, the type of polyolefin polymers or copolymers present in the thermoplastic polyolefin resin of the TPV (e.g., ethylene polymers, ethylene copolymers, propylene polymers, propylene copolymers, ethylene-propylene copolymers) include at least one of the types of polyolefin polymers or copolymers present in the polyolefin resin portion of the coating mixture. For example, the thermoplastic polyolefin resin of the TPV and the polyolefin resin portion of the coating mixture may both comprise one or more propylene polymers or copolymers. In some such aspects, the shared polyolefin polymers or copolymers of the same type may include monomeric units having the same chemical structures. For example, the thermoplastic polyolefin resin of the TPV and the polyolefin resin portion of the coating mixture may both comprise propylene homopolymers, or may both comprise propylene and 1-butene copolymers.

Alternatively, in other aspects, when the thermoplastic resin of the TPV is a thermoplastic polyolefin resin, the type of polyolefin polymers or copolymers present in the thermoplastic polyolefin resin of the TPV (e.g., ethylene polymers, ethylene copolymers, propylene polymers, propylene copolymers, ethylene-propylene copolymers) differ from the types of polyolefin polymers or copolymers present in the polyolefin resin portion of the coating mixture. For example, the thermoplastic polyolefin resin of the TPV may comprise one or more propylene polymers or copolymers, while the polyolefin resin portion of the coating mixture is substantially free of propylene polymers or copolymers. In some such aspects, the thermoplastic polyolefin resin of the TPV may comprise a propylene homopolymer, while the polyolefin resin portion of the coating mixture comprises a propylene copolymer.

TPVs having a variety of properties can be used in the coating mixture. In one aspect, the TPV has a Duro A hardness ranging from about 40 to about 60, or from about 45 to about 55, or from about 49 to about 52, as determined using ISO 7619 and measured instantaneously. In another aspect, the TPV has a melt flow index ranging from about 5 to about 40, or from about 10 to about 30, or from about 15 to about 25, as determined using ISO 1133 using a 10 kg weight. In yet another aspect, the TPV has a percent elongation at break of at least 400 percent, or at least 500 percent, or at least 530 percent, as determined using ISP 37 with a JIS No. 3 dumbell and a rate of 500 mm per minute.

The coating mixture includes about 80 weight percent to about 50 weight percent of the polyolefin resin and about 5 weight percent to about 45 weight percent of the TPV. The coating mixture can include about 75 weight percent to about 65 weight percent of the polyolefin resin and about 25 weight percent to about 35 weight percent of the TPV. In a particular example, the coating layer includes about 70 weight percent of a propylene-based alpha-olefin copolymer (TAFMER^{™} PN-3560 (Mitsui Chemicals)) and 30 weight percent of a TPV formed of an olefin-based rubber dispersed in a polyolefin resin (MILASTOMER^{™} 5030NS (Mitsui Chemicals)). In addition, the coating mixture can include one or more fillers, or one or more pigments, or both, while in another aspect, the coating mixture can be free of or substantially free (e.g., about 90 percent free, about 95 percent free, or about 99 percent free) of fillers or pigments, depending upon the design and use of the composite textile.

The coating mixture can be made by mixing the TPV into the polyolefin resin when both the polyolefin resin and the TPV are in a liquid or semi-solid state, such as a molten state. Alternatively, the coating mixture can be made by kneading a solid, semi-solid or liquid TPV into the polyolefin resin while the polyolefin resin is in a kneadable state. Similarly, the coating mixture can be made by dispersing a solid TPV into the polyolefin resin while the polyolefin resin is in a semi-solid or liquid state.

Along similar lines, the coating mixture can be applied to the textile layer while the coating mixture is in a solid state (e.g., film), in a semi-solid state (e.g., as a paste spread onto the textile layer, or a molten material extruded onto the textile layer), or in a liquid state (e.g., as a liquid which is sprayed or rolled onto the textile layer). When the application process involves applying the coating mixture in a liquid or semi-solid state, the coating layer will be bonded to the textile layer once the coating mixture has solidified.

In some aspects, the coating mixture is applied directly to, and thus is bonded directly to, the first side of the textile layer. In other aspects, one or more intermediate layers may be present between the coating layer and the textile layer, in which case, the coating layer is bonded indirectly to the textile layer via the intermediate layer(s).

The coating layer can be a film formed on the textile layer or can be a preformed film disposed on the textile layer. In an example, the film of the coating layer can be an extruded film or a co-extruded film. In another example, the coating layer is the solidified product of a liquid polymeric material. The thickness of the coating layer can be about 100-400 microns, or about 300-400 microns.

The composite textile can be formed using a method that includes bonding the coating layer to the textile layer to form the composite textile. Each of the coating layer and the textile layer has a first side and an opposing second side. The second side of the coating layer is bonded (e.g., directly or indirectly) to the first side of the textile layer. In one example, the coating layer includes a film, which is bonded to the textile layer by disposing the film on the textile layer and applying heat and pressure to the combination of the film and the textile layer to form the composite textile. In another example, the coating layer can be formed by applying a liquid coating composition (e.g., a dispersion of the polyolefin resin and the TPV in a liquid dispersant) to the textile layer and solidifying the liquid coating composition, which results in the formation of the coating layer. A texture can be applied to the coating layer, for example using a textured roller or a textured release paper.

The composite textile can be formed into or be part of an article, in particular an article of footwear, sporting equipment, or footwear. The article can be an article of manufacture or a component of the article. The article of manufacture can include footwear, apparel (e.g., shirts, jerseys, pants, shorts, gloves, glasses, socks, hats, caps, jackets, undergarments), containers (e.g., backpacks, bags), and upholstery for furniture (e.g., chairs, couches, car seats), bed coverings (e.g., sheets, blankets), table coverings, towels, flags, tents, sails, and parachutes, or components of any one of these. In addition, the composite textile can be used with or disposed on textiles or other items such as striking devices (e.g., bats, rackets, sticks, mallets, golf clubs, paddles, etc.), athletic equipment (e.g., golf bags, baseball and football gloves, soccer ball restriction structures), protective equipment (e.g., pads, helmets, guards, visors, masks, goggles, etc.), locomotive equipment (e.g., bicycles, motorcycles, skateboards, cars, trucks, boats, surfboards, skis, snowboards, etc.), balls or pucks for use in various sports, fishing or hunting equipment, furniture, electronic equipment, construction materials, eyewear, timepieces, jewelry.

The article can be an article of footwear. The article of footwear can be designed for a variety of uses, such as sporting, athletic, military, work-related, recreational, or casual use. Primarily, the article of footwear is intended for outdoor use on unpaved surfaces (in part or in whole), such as on a ground surface including one or more of grass, turf, gravel, sand, dirt, clay, mud, pavement, whether as an athletic performance surface or as a general outdoor surface. However, the article of footwear may also be desirable for indoor applications, such as indoor sports including dirt playing surfaces for example (*e.g.*, indoor baseball fields with dirt infields).

In particular, the article of footwear can be designed for use in indoor or outdoor sporting activities, such as global football/soccer, golf, American football, rugby, baseball, running, track and field, cycling (*e.g*., road cycling and mountain biking). article of footwear can optionally include traction elements (*e.g*., lugs, cleats, studs, and spikes as well as tread patterns) to provide traction on soft and slippery surfaces, where components of the present disclosure can be used or applied between or among the traction elements and optionally on the sides of the traction elements but on the surface of the traction element that contacts the ground or surface. Cleats, studs and spikes are commonly included in footwear designed for use in sports such as global football/soccer, golf, American football, rugby, baseball, which are frequently played on unpaved surfaces. Lugs and/or exaggerated tread patterns are commonly included in footwear including boots design for use under rugged outdoor conditions, such as trail running, hiking, and military use.

In particular, the article can be an article of apparel (i.e., a garment). The article of apparel can be an article of apparel designed for athletic or leisure activities. The article of apparel can be an article of apparel designed to provide protection from the elements (e.g., wind and/or rain), or from impacts.

In particular, the article can be an article of sporting equipment. The article of sporting equipment can be designed for use in indoor or outdoor sporting activities, such as global football/soccer, golf, American football, rugby, baseball, running, track and field, cycling (*e.g*., road cycling and mountain biking).

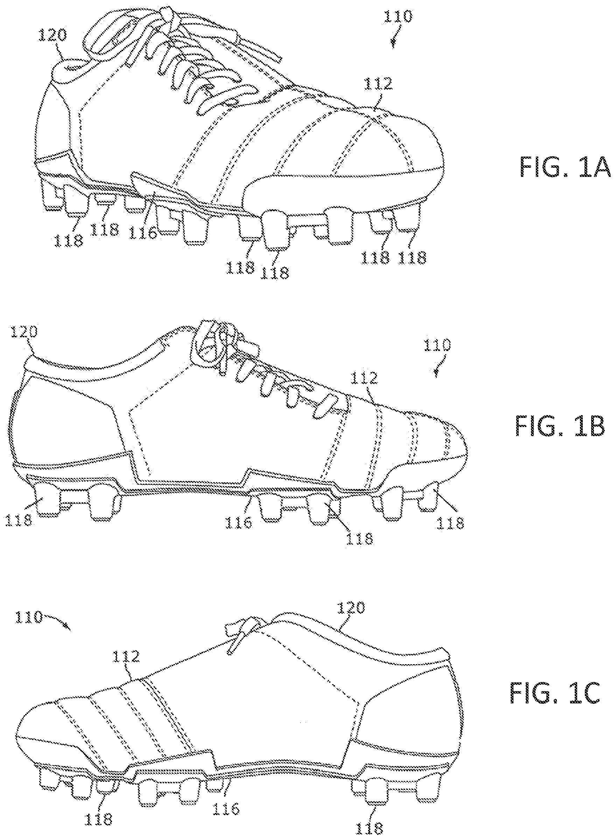

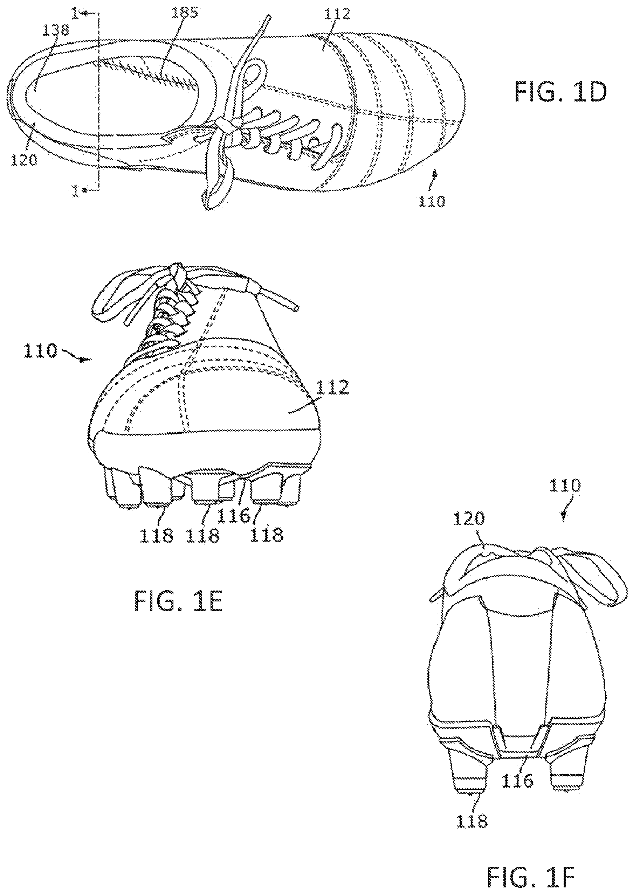

FIG. 1A illustrates a lateral side perspective view of an exemplary cleated article of athletic footwear 110, for example a global football/soccer boot that can include the composite textile (not shown but could be part of the upper 112). As seen in FIG. 1A, the article of footwear 110 includes an upper 112 and a sole structure 113, which includes a plate 116 and a textile 114 disposed on the upper side 152 of the plate. The textile 114 is located between the plate 116 and the upper 112. The plate 116 includes multiple traction elements 118. When worn, traction elements 118 provide traction to a wearer so as to enhance stability. One or more of the traction elements 118 can be integrally formed with the plate, as illustrated in FIG. 1A, or can be removable. Optionally, one or more of the traction elements 118 can include a traction element tip (not pictured) configured to be ground-contacting. FIG. 1B illustrates a lateral side elevational view of article of footwear 110. When the article of footwear 110 is worn, the lateral side of the article 110 is generally oriented on the side facing away from the centerline of the wearer's body. FIG. 1C is a medial side elevational view of the article of footwear 110. When the article of footwear 110 is worn, the medial side generally faces toward the centerline of the wearer's body. FIG. 1D is a top view of the article of footwear 110 (with no sock liner in place) and without a lasting board or other board-like member 115, and further shows upper 112. Upper 112 includes a padded collar 120. Alternatively, or in addition, the upper can include a region configured to extend up to or over a wearer's ankle (not illustrated). In at least one aspect, upper 112 is tongue-less, with the upper wrapping from the medial side of the wearer's foot, over the top of the foot, and under the lateral side portion of the upper, as illustrated in FIG. 1D. Alternatively, the article of footwear can include a tongue (not illustrated). As illustrated in FIG. 1A-1G, the laces of the article of footwear 110 optionally can be located on the lateral side of the article. In other examples, the article of footwear may have a slip-on design or may include a closure system other than laces (not illustrated). FIG. 1E and FIG. 1F are, respectively, front and rear elevational views of the article of footwear 110.

The present disclosure provides for a composite textile that includes a coating layer and a textile layer. The coating layer and the textile layer each have a first side and an opposing second side, where the second side of the coating layer is bonded, directly to the first side of the textile layer, or are indirectly bonded to each other *via* one or more intermediate layers. The coating layer includes a coating mixture including a polyolefin resin (e.g., an alpha-olefin polymer or an alpha-olefin copolymer such as alpha-olefin polypropylene copolymer) and a TPV wherein the TPV comprises a cured rubber (e.g., cured polyolefin rubber) dispersed in a thermoplastic resin, wherein the coating mixture comprises 80 weight percent to 50 weight percent of the polyolefin resin and 5 weight percent to 45 weight percent of the TPV. The coating layer can have a thickness of about 100-400 microns and can be a film, for example an extruded film or a film formed by a liquid polymeric material.

The coating layer can also have one or more chemical, physical, or mechanical properties. For example, the coating layer can have an elongation of at least 40 percent to 100 percent in a first direction and in a second direction transverse to the first direction. In this regard, the coating layer can have a machine direction in which it is bonded to the first side of the textile and a transverse direction which is transverse to the machine direction. The elongation of the coating layer can be about 40 percent to about 100 percent, or about 50 percent to about 90 percent in the machine direction, and about 50 percent to about 100 percent, or about 60 percent to about 80 percent in the transverse direction. A coating layer having these values for elongation is beneficial.

Other chemical, physical, or mechanical properties can include one or more of the following: residual strain, Young's modulus, a melting temperature, Vicat softening temperature, glass transition temperature, melt flow index, hardness, strain at yield, elongation at break, and coefficient of friction. Specifically, the coating layer can have a residual strain of less than 4 percent, or less than 3 percent, at an applied strain of 10 percent. A residual strain of less than 4 percent is beneficial.

A melt flow index of the coating mixture can be about 0.5 to about 25 or is about 2 to 15 according to ASTM D1238-13 (conditions used 230° C/2.16 Kg), where the melt flow index in these ranges is beneficial.

The coating mixture can have a Young's modulus of about 10 to about 100 MPa, or of about 50 to 70 MPa, where the Young's modulus in these ranges is beneficial.

A strain at yield of the coating mixture can be about 3 percent to about 5 percent, or about 3.5 percent to about 4.5 percent, or is about 4 percent, where the strain at yield in these ranges is beneficial.

A melting temperature of the coating mixture can be greater than 100 degrees C (e.g., 100 to 200 or 100 to 25 or 100 to 300 degrees C)), or greater than 70 degrees C, or greater than 60 degrees C up to about 150, about 200, 250, or 300 degrees C. A Vicat softening temperature of the coating mixture can be greater than 60 degrees C (e.g., 60 to 150, 60 to 200, or 60 to 250 degrees C)), or greater than 70 degrees C, or greater than 100 degrees C up to about 150, 200, 250, or 300 degrees C. A glass transition temperature of the coating mixture can be less than 20 degrees C (e.g., about 0 to 20, about 5 to 20, about 10 to 20 degrees C). A hardness of the coating mixture can be about 55 to 95 Shore A or is about 60 to about 80 Shore A. A strain at yield of the coating mixture can be about 3 percent to about 5 percent, or about 3.5 percent to about 4.5 percent, or is about 4 percent. An elongation at break of the coating mixture can be greater than 100 percent, or greater than 250 percent, or greater than 500 percent, or ranges from about 100 percent to about 750 percent. A coefficient of friction of the coating mixture layer can be about 0.7 to about 2.0, or about 0.7 to about 1.5, or about 0.7 to about 1.0, as determined by ASTM D1894.

As described above, the composite textile includes a textile layer including a textile (e.g., a first textile). In an embodiment, the first textile of the textile layer is a non-woven textile. In another embodiment, in which the composite textile is a synthetic leather, the first textile of the textile layer can be a knit textile, or a woven textile. A "textile" may be defined as any material manufactured from fibers, filaments, or yarns characterized by flexibility, fineness, and a high ratio of length to thickness. Textiles generally fall into two categories. The first category includes textiles produced directly from webs of filaments or fibers by randomly interlocking to construct non-woven fabrics and felts. The second category includes textiles formed through a mechanical manipulation of yarn, thereby producing a woven fabric, a knitted fabric, a braided fabric, a crocheted fabric.

The terms "filament," "fiber," or "fibers" as used herein refer to materials that are in the form of discrete elongated pieces that are significantly longer than they are wide. The fiber can include natural, manmade or synthetic fibers. The fibers may be produced by conventional techniques, such as extrusion, electrospinning, interfacial polymerization, pulling. The fibers can include carbon fibers, boron fibers, silicon carbide fibers, titania fibers, alumina fibers, quartz fibers, glass fibers, such as E, A, C, ECR, R, S, D, and NE glasses and quartz.

The fibers can be fibers formed from synthetic polymers capable of forming fibers such as poly(ether ketone), polyimide, polybenzoxazole, poly(phenylene sulfide), polyesters, polyolefins (e.g., polyethylene, polypropylene), aromatic polyamides (e.g., an aramid polymer such as para-aramid fibers and meta-aramid fibers), aromatic polyimides, polybenzimidazoles, polyetherimides, polytetrafluoroethylene, acrylic, modacrylic, poly(vinyl alcohol), polyamides, polyurethanes, and copolymers such as polyether-polyurea copolymers, polyester-polyurethanes, polyether block amide copolymers.

The fibers can be natural fibers (e.g., silk, wool, cashmere, vicuna, cotton, flax, hemp, jute, sisal). The fibers can be man-made fibers from regenerated natural polymers, such as rayon, lyocell, acetate, triacetate, rubber, and poly(lactic acid).

In an aspect, the fibers or filaments can be made of a thermoplastic material such as those described herein. The thermoplastic material can comprise a polyester, for example where the polyester is made from polyester chips. The thermoplastic material can be a polyester, for example where the polyester is made from polyester chips. In an aspect, the polyester chips can be purchased from Shinkong Synthetic Fibers Corp (referred to as "polyester demi dull chip" or as "polyester chip"), where the polyester chip has an intrinsic viscosity of 0.643 +/- 0.015 dl/g, melting point of 252 +/- 3.0 °C, acid value 30 Max mircro-equ/g, D-EG 1.48 +/- 0.2 weight percent, Moisture content 0.4 Max percent, and TiO₂ content of 0.350. +/- 0.05 percent.

The fibers can have an indefinite length. For example, man-made and synthetic fibers are generally extruded in substantially continuous strands. Alternatively, the fibers can be staple fibers, such as, for example, cotton fibers or extruded synthetic polymer fibers can be cut to form staple fibers of relatively uniform length. The staple fiber can have a have a length of about 1 millimeter to 100 centimeters or more as well as any increment therein (e.g., 1 millimeter increments).

In an aspect, the fiber is a polyester fiber (i.e., formed from the polyester chips described above and herein) having the following characteristics: length, 51 +/- 3 millimeters; thickness, 3.0 +/- 0.5 denier; tenacity, greater than or equal to 4.5 grams/denier; elongation, 50 +/- 10 percent; crimp, 12 +/- 2 percent; surface electric resistance, greater than or equal to 10⁹ ohms; shrinkage, 7↓ percent; and OPU, 0.26 +/- 0.03 percent.

The fiber can have any of a variety of cross-sectional shapes. Natural fibers can have a natural cross-section, or can have a modified cross-sectional shape (e.g., with processes such as mercerization). Man-made or synthetic fibers can be extruded to provide a strand having a predetermined cross-sectional shape. The cross-sectional shape of a fiber can effect its properties, such as its softness, luster, and wicking ability. The fibers can have round or essentially round cross sections. Alternatively, the fibers can have non-round cross sections, such as flat, oval, octagonal, rectangular, wedge-shaped, triangular, dog-bone, multi-lobal, multi-channel, hollow, core-shell, or other shapes.

The fiber can be processed. For example, the properties of fibers can be affected, at least in part, by processes such as drawing (stretching) the fibers, annealing (hardening) the fibers, and/or crimping or texturizing the fibers.

In some cases a fiber can be a multi-component fiber, such as one comprising two or more co-extruded polymeric materials. The two or more co-extruded polymeric materials can be extruded in a core-sheath, islands-in-the-sea, segmented-pie, striped, or side-by-side configuration. A multi-component fiber can be processed in order to form a plurality of smaller fibers (e.g., microfibers) from a single fiber, for example, by remove a sacrificial material.

The fiber can be a carbon fiber such as TARIFYL produced by Formosa Plastics Corp. of Kaohsiung City, Taiwan, (e.g., 12,000, 24,000, and 48,000 fiber tows, specifically fiber types TC-35 and TC-35R), carbon fiber produced by SGL Group of Wiesbaden, Germany (e.g., 50,000 fiber tow), carbon fiber produced by Hyosung of Seoul, South Korea, carbon fiber produced by Toho Tenax of Tokyo, Japan, fiberglass produced by Jushi Group Co., LTD of Zhejiang, China (e.g., E6, 318, silane-based sizing, filament diameters 14, 15, 17, 21,and 24 micrometers), and polyester fibers produced by Amann Group of Bonningheim, Germany (e.g., SERAFILE 200/2 non-lubricated polyester filament and SERAFILE COMPHIL 200/2 lubricated polyester filament).

A plurality of fibers includes 2 to hundreds or thousands or more fibers. The plurality of fibers can be in the form of bundles of strands of fibers, referred to as tows, or in the form of relatively aligned staple fibers referred to as sliver and roving. A single type fiber can be used either alone or in combination with one or more different types of fibers by co-mingling two or more types of fibers. Examples of co-mingled fibers include polyester fibers with cotton fibers, glass fibers with carbon fibers, carbon fibers with aromatic polyimide (aramid) fibers, and aromatic polyimide fibers with glass fibers.

As used herein, the term "yarn" refers to an assembly formed of one or more fibers, wherein the strand has a substantial length and a relatively small cross-section, and is suitable for use in the production of textiles by hand or by machine, including textiles made using weaving, knitting, crocheting, braiding, sewing, embroidery, or ropemaking techniques. Thread is a type of yarn commonly used for sewing.

Yarns can be made using fibers formed of natural, man-made and synthetic materials. Synthetic fibers are most commonly used to make spun yarns from staple fibers, and filament yarns. Spun yarn is made by arranging and twisting staple fibers together to make a cohesive strand. The process of forming a yarn from staple fibers typically includes carding and drawing the fibers to form sliver, drawing out and twisting the sliver to form roving, and spinning the roving to form a strand. Multiple strands can be plied (twisted together) to make a thicker yarn. The twist direction of the staple fibers and of the plies can affect the final properties of the yarn. A filament yarn can be formed of a single long, substantially continuous filament, which is conventionally referred to as a "monofilament yarn," or a plurality of individual filaments grouped together. A filament yarn can also be formed of two or more long, substantially continuous filaments which are grouped together by grouping the filaments together by twisting them or entangling them or both. As with staple yarns, multiple strands can be plied together to form a thicker yarn.

Once formed, the yarn can undergo further treatment such as texturizing, thermal or mechanical treating, or coating with a material such as a synthetic polymer. The fibers, yarns, or textiles, or any combination thereof, used in the disclosed articles can be sized. Sized fibers, yarns, and/or textiles are coated on at least part of their surface with a sizing composition selected to change the absorption or wear characteristics, or for compatibility with other materials. The sizing composition facilitates wet-out and wet-through of the coating or resin upon the surface and assists in attaining desired physical properties in the final article. An exemplary sizing composition can comprise, for example, epoxy polymers, urethane-modified epoxy polymers, polyester polymers, phenol polymers, polyamide polymers, polyurethane polymers, polycarbonate polymers, polyetherimide polymers, polyamideimide polymers, polystylylpyridine polymers, polyimide polymers bismaleimide polymers, polysulfone polymers, polyethersulfone polymers, epoxy-modified urethane polymers, polyvinyl alcohol polymers, polyvinyl pyrrolidone polymers, and mixtures thereof.

Two or more yarns can be combined, for example, to form composite yarns such as single- or double-covered yarns, and core-spun yarns. Accordingly, yarns may have a variety of configurations that generally conform to the descriptions provided herein.

The yarn can comprise at least one thermoplastic material (e.g., one or more of the fibers can be made of thermoplastic material). The yarn can be made of a thermoplastic material. The yarn can be coated with a layer of a material such as a thermoplastic material.

The linear mass density or weight per unit length of a yarn can be expressed using various units, including denier (D) and tex. Denier is the mass in grams of 9000 meters of yarn. The linear mass density of a single filament of a fiber can also be expressed using denier per filament (DPF). Tex is the mass in grams of a 1000 meters of yarn. Decitex is another measure of linear mass, and is the mass in grams for a 10,000 meters of yarn.

As used herein, tenacity is understood to refer to the amount of force (expressed in units of weight, for example: pounds, grams, centinewtons or other units) needed to break a yarn (i.e., the breaking force or breaking point of the yarn), divided by the linear mass density of the yarn expressed, for example, in (unstrained) denier, decitex, or some other measure of weight per unit length. The breaking force of the yarn is determined by subjecting a sample of the yarn to a known amount of force, for example, using a strain gauge load cell such as an INSTRON brand testing system (Norwood, MA, USA). Yarn tenacity and yarn breaking force are distinct from burst strength or bursting strength of a textile, which is a measure of how much pressure can be applied to the surface of a textile before the surface bursts.

Generally, in order for a yarn to withstand the forces applied in an industrial knitting machine, the minimum tenacity required is approximately 1.5 grams per Denier. Most yarns formed from commodity polymeric materials generally have tenacities in the range of about 1.5 grams per Denier to about 4 grams per Denier. For example, polyester yarns commonly used in the manufacture of knit uppers for footwear have tenacities in the range of about 2.5 to about 4 grams per Denier. Yarns formed from commodity polymeric materials which are considered to have high tenacities generally have tenacities in the range of about 5 grams per Denier to about 10 grams per Denier. For example, commercially available package dyed polyethylene terephthalate yarn from National Spinning (Washington, NC, USA) has a tenacity of about 6 grams per Denier, and commercially available solution dyed polyethylene terephthalate yarn from Far Eastern New Century (Taipei, Taiwan) has a tenacity of about 7 grams per Denier. Yarns formed from high performance polymeric materials generally have tenacities of about 11 grams per Denier or greater. For example, yarns formed of aramid fiber typically have tenacities of about 20 grams per Denier, and yarns formed of ultra-high molecular weight polyethylene (UHMWPE) having tenacities greater than 30 grams per Denier are available from Dyneema (Stanley, NC, USA) and Spectra (Honeywell-Spectra, Colonial Heights, VA, USA).

Various techniques exist for mechanically manipulating yarns to form a textile. Such techniques include, for example, interweaving, intertwining and twisting, and interlooping. Interweaving is the intersection of two yarns that cross and interweave at right angles to each other. The yarns utilized in interweaving are conventionally referred to as "warp" and "weft." A woven textile includes include a warp yarn and a weft yarn. The warp yarn extends in a first direction, and the weft strand extends in a second direction that is substantially perpendicular to the first direction. Intertwining and twisting encompasses various procedures, such as braiding and knotting, where yarns intertwine with each other to form a textile. Interlooping involves the formation of a plurality of columns of intermeshed loops, with knitting being the most common method of interlooping. The textile may be primarily formed from one or more yarns that are mechanically-manipulated, for example, through interweaving, intertwining and twisting, and/or interlooping processes, as mentioned above.

In an embodiment, the first textile of the textile layer is a nonwoven textile. Generally, a nonwoven textile or fabric is a sheet or web structure made from fibers and/or yarns that are bonded together. The bond can be a chemical and/or mechanical bond, and can be formed using heat, solvent, adhesive or a combination thereof. Exemplary nonwoven fabrics are flat or tufted porous sheets that are made directly from separate fibers, molten plastic and/or plastic film. They are not made by weaving or knitting and do not necessarily require converting the fibers to yarn, although yarns can be used as a source of the fibers. Nonwoven textiles are typically manufactured by putting small fibers together in the form of a sheet or web (similar to paper on a paper machine), and then binding them either mechanically (as in the case of felt, by interlocking them with serrated or barbed needles, or hydro-entanglement such that the inter-fiber friction results in a stronger fabric), with an adhesive, or thermally (by applying binder (in the form of powder, paste, or polymer melt) and melting the binder onto the web by increasing temperature). A nonwoven textile can be made from staple fibers (e.g., from wetlaid, airlaid, carding/crosslapping processes), or extruded fibers (e.g., from meltblown or spun-bond processes, or a combination thereof), or a combination thereof. Bonding of the fibers in the nonwoven textile can be achieved with thermal bonding (with or without calendering), hydro-entanglement, ultrasonic bonding, needlepunching (needlefelting), chemical bonding (e.g., using binders such as latex emulsions or solution polymers or binder fibers or powders), meltblown bonding (e.g., fiber is bonded as air attenuated fibers intertangle during simultaneous fiber and web formation), spun-bond, non-woven, carded non-woven, and a melt-blown non-woven.

In particular, the nonwoven textile can be spun-bond non-woven textile, for example made of fibers comprising polyester (e.g., polyester made from polyester chips). For example, the polyester spun-bond non-woven textile can have the following characteristics: Gauge 1oz top weight (mm), 1.01-1.05; Weight (g/m²), 315-324; Tensile Length (kg/2.54cm), 24-25.6; Tensile Width (kg/2.54cm), 25-26.5; Elongation Length (%), 58-65; Elongation Width (%), 73-74; Tongue Tear Length (kg), 7.3-8.1; Tongue Tear Width (kg), 6.1-6.2; Mullen Burst (kg/cm²), 20-21; and Ply Adhesion (Dry) (kg/cm), 12.3-13.4.

In some aspect, the textile can include fibers or filaments including or made of a thermoplastic material, where the thermoplastic material can include a polyolefin, or a polyamide, or a polyurethane, or a polyester, or a polyether polymer, or any combination thereof. The polymeric component can consists essentially of one or more polyesters. The polymeric component can consists essentially of one or more polyolefins. The one or more polyolefins can includes or consists essentially of one or more polypropylenes.

The melting temperature of the thermoplastic material can be greater than 100 degrees C, or greater than 150 degrees C, or greater than 200 degrees C, or greater than 250 degrees C. The textile can have a thickness of about 0.5 to 2.0 microns, or of about 0.7 to 1.5 microns, or of about 1.0 to 1.5 microns. The textile can havea machine direction in which it is bonded to the coating layer and a transverse direction which is transverse to the machine direction. The elongation of the textile can be about 40 percent to about 100 percent, or about 50 percent to about 90 percent in the machine direction, and about 50 percent to about 120 percent, or about 60 percent to about 100 percent, or about 60 percent to about 80 percent in the transverse direction. The textile can have a residual strain of less than 20 percent or less than 15 percent in the machine direction, and a residual strain of less than 65 percent or less than 60 percent or less than 50 percent in the transverse direction, in a cyclic test with a maximum load of 50N.

The composite textile can have a thickness of about 0.8 millimeters to about 2.5 millimeters, or about 0.9 millimeters to about 2.2 millimeters, or about 1 millimeter to about 2 millimeters, or about 1.3 millimeters to about 1.5 millimeters. The composite textile can have a weight of about 400 to about 1,000, or about 450 to about 900, or about 500 to about 700 grams per square meter.

The composite textile can have a tensile strength in the length direction of the composite textile is about 25 to about 40, or about 30 to about 35 kilograms per 2.54 centimeters, where a tensile strength in the width direction of the composite textile is about 25 to about 40, or about 30 to about 35 kilograms per 2.54 centimeters.

The composite textile can have an elongation in the length direction of the composite textile is about 30 to about 100, or about 40 to about 90 percent. The composite textile can have an elongation in the width direction of the composite textile is about 50 to about 140, or about 60 to about 120 percent. The composite textile can have a Mullen burst score in the range of 15 to 25, or of 10 to 22, as determined according to ASTM D 3786.

In addition to the coating layer, a hot melt adhesive can be part of the composite textile. The hot melt adhesive layer can have a first side and a second side opposing the first side. The second side of the coating layer can be bonded directly to the first side of the hot melt adhesive layer, while the second side of the hot melt adhesive layer is bonded directly to the first side of the textile layer. The hot melt adhesive layer can have a melting temperature of at least 10 degrees C below, optionally at least 20 degrees C below a Vicat softening temperature of the coating mixture. The hot melt adhesive layer can have a melting temperature of the hot melt adhesive is at least 10 degrees C below, optionally at least 20 degrees C below a Vicat softening temperature of the thermoplastic material of the textile.

The composite textile can be made into an article of sporting equipment, article of clothing, or an article of footwear. The composite textile can be part of or a component of an article of sporting equipment, article of clothing, or an article of footwear. In particular, the composite textile can be part of an upper in a shoe that can be attached to a sole structure and other components to form a shoe. The method includes bonding, directly or indirectly, the coating layer to the textile layer to form the composite textile. The process can include using heat and/or pressure to bond the layers when the coating layer is a film. When the coating layer is formed using a liquid, a liquid coating composition can be applied to the textile layer surface and solidified to form the coating layer. The liquid coating composition can be a dispersion that includes the polyolefin resin and the TPV along with a liquid dispersant. A texture can also be applied to the coating layer using a textured roller or textured release paper, for example.

Having described various aspects of the composite textile, the following will describe the composite textile in regard to synthetic leather. In one embodiment, the composite textile is a synthetic leather that can include the coating layer affixed to a textile layer. The composite textile can be a conventional synthetic leather with an additional coating layer forming an outer surface of the synthetic leather, wherein the additional coating layer comprises a coating mixture as disclosed herein. The coating layer includes the polyolefin resin and the TPV. Optionally, the textile layer can include a fiber or a yarn comprising a fiber/yarn polymeric composition. In some aspects, the disclosed composite textiles can optionally further comprise a protective or decorative layer affixed to the coating layer.

The disclosed synthetic leathers are believed to possess several advantages, particularly for use in the manufacture of articles, such as articles of footwear or articles of clothing. It is believed that the use of the coating layer in the disclosed synthetic leathers can promote better bonding between other components or materials used in articles, such as articles of footwear or articles of clothing, while resisting creasing and bagging.

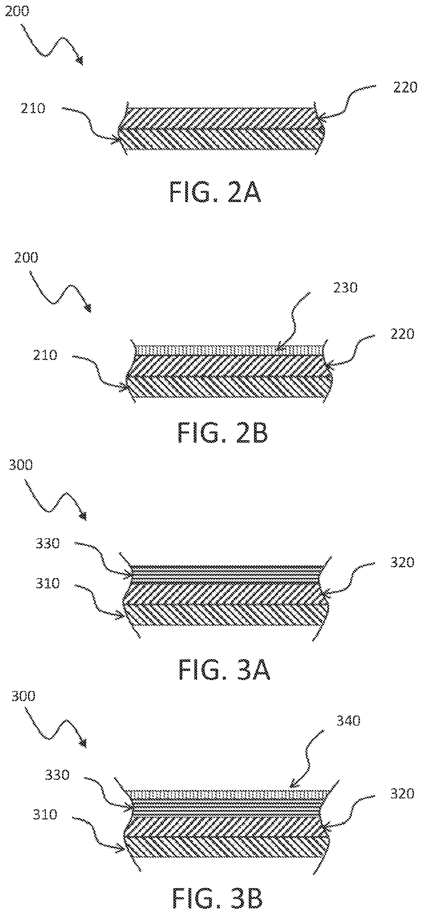

FIG. 2A is a cross-sectional view of a disclosed composite textile 200 comprising a textile layer 210, to which is affixed a coating layer 220. FIG. 2B is a cross-sectional view of a disclosed composite textile 200 comprising a textile layer 210, to which is affixed a coating layer 220, and further comprising a protective or decorative layer 230 affixed to the coating layer 220. It is understood that the textile layer can be any suitable textile, including, but not limited to, a knit textile, a woven textile, a non-woven textile, a crocheted textile, and a braided textile. Knit textiles suitable for use in the disclosed synthetic leathers include, but are not limited to, a flat knit textile, a circular knit textile, or a weft knit textile.

The disclosed composite textiles can comprise a plurality of coating layers, where a plurality as used herein is two or more coating layers. FIG. 3A is a cross-sectional view of a composite textile 300 comprising a textile layer 310, to which is affixed a first coating layer 320, and a second coating layer 330 affixed to the first coating layer 320. As illustrated in FIG. 3A, the textile layer 310 and the first coating layer 320 can be distinct layers. Alternatively, the combination of the synthetic textile and the first coating can form a single composite layer.

When a plurality of coating layers is used, the polymeric component of each coating layer can comprise the same or different types polymers or TPVs or the same polymers or TPVs at different concentrations. For example, when the first and second coating layers comprise different polyolefins, the polyolefins can have different chemical structures, or when the polyolefins have the same chemical structures, the concentrations are different. Similarly, when the first and second coating layers comprise different TPVs, the TPVs can have different chemical structures, or when the TPVs have the same chemical structures, the concentrations are different. Also, both the polyolefin and the TPVs can have different chemical structures and/or different concentrations.

FIG. 3B is a cross-sectional view of a disclosed composite textile 300 comprising a textile layer 310, to which is affixed a first coating layer 320, and a second coating layer 330 affixed to the first coating layer 320, and further comprising a protective or decorative layer 340 affixed to the second coating layer 330. It is understood that the textile layer can be any suitable textile, including, but not limited to, a textile chosen from a knit textile, a woven textile, a non-woven textile, a crocheted textile, or a braided textile. Knit textiles suitable for use in the disclosed synthetic leathers include, but are not limited to, a knit textile chosen from a flat knit textile, a circular knit textile, or a weft knit textile.

The thickness of the coating layer can be modified as needed. In the case when two or more coating layers are used, the thickness of each layer can vary or can be modified. Referring to FIG. 3A, in one aspect, the thickness of the first coating composition 320 is less than thickness of the second coating composition 330, for example at least 5 percent less. In another aspect, the thickness of the first coating composition 320 is greater than thickness of the second coating composition 330, for example, at least 5 percent greater. In another aspect, the thickness of the first coating composition 320 is equal to the thickness of the second coating composition 330.

In one aspect, the coating layer can be a film that is affixed to the textile layer. For example, the composition to form the coating layer can be extruded into a film that is subsequently affixed to the textile layer. In other aspects, two or more different films can be extruded and sequentially affixed to the textile layer. For example, the first and second coating compositions depicted in FIGS. 3A and 3B can each be films that have been affixed to the textile layer.

Although polyester (PET) yarns or fibers can be used manufacture of a textile layer, e.g., used in a fiber or yarn used to make the textile layer, it is possible to use other types of synthetic fibers, natural fibers, or regenerated fibers. Moreover, the textile layer can utilize one or more fibers or yarns comprising a thermoplastic composition. The use of microfibers in the textile layer can improve the hand (softness and flexibility) of the synthetic leather.

In some instances, the textile or coating layer can comprise a thermoplastic polymer such as those described herein. For example, a textile or coating layer can comprise a polyurethane or a polyvinylchloride. It may be desirable to use a polyurethane-based synthetic leathers in articles of footwear, and a polyvinylchloride-based synthetic leathers are commonly used in sporting equipment.

Various methods can be used to manufacture a disclosed composite textile, including a synthetic leather. In general, these methods have a step of bringing together the textile layer with the coating layer (or the coating mixture or a precursor coating layer composition which, when cured, forms the coating mixture). In one aspect, the coating mixture or the coating layer composition can be applied to the textile layer as a liquid, followed by curing or drying. The particular approach to provide the liquid or semi-solid coating mixture or precursor coating layer(s) composition can be any suitable method for application of a liquid or semi-solid polymer composition to a textile layer, including, but not limited to, spreading onto or spraying onto the textile layer. In some instances, depending on the properties of the coating mixture or the precursor coating layer composition and the manufacturing process, the liquid or semi-solid composition may impregnate the textile layer. In another aspect, the coating mixture or precursor coating layer composition can be initially formed into a film, and the film is then affixed to the textile layer, either using a separate adhesive layer, or by applying a solvent which softens the film and pressure, or by applying heat to soften the film and pressure.

In other aspects, when a plurality of polymeric coatings is to be applied to the textile layer, each coating layer can be applied sequentially to the textile layer. In some aspects, one or more coating layers can be applied to the textile layer in the form of films, including a single layer film or a multi-layer film. For example, the single layer film can be an extruded film, or the multi-layer film can be a co-extruded multi-layer film or a laminated multi-layer film. In other aspects, one or more coating layers can be applied to the textile layer in the form of a liquid or a semi-solid. The particular approach to provide the liquid polymeric coating layer(s) can be any suitable method for application of a liquid to a substrate, including, but not limited to, spreading onto or spraying onto a coating layer that has been previously applied to the textile layer.

It is to be understood that the method of making a disclosed composite textile can further include a step of texturizing the composite textile. The texture can be applied during formation of the coating layer, or during adhesion of the coating layer and the textile layer to each other, or can be applied after affixing the textile layer and the coating layer to each other. The texture can be applied using a roller (e.g., a heated metal roller), or using a textured release paper.

As noted above, it is believed that one advantage of using coating layer to form an outer surface of a disclosed composite textile (i.e., the coating layer or the protective/decorative layer on the "top" or "front" side of the composite textile) is that it provides an outer layer of the composite textile which is easier to bond to other polyolefin-based polymers. For example, when a synthetic leather sample is bonded to an injection-molded polyolefin component, the bond score of a synthetic leather having a coating layer comprising the coating mixture as described herein is improved as compared to the bond score for conventional synthetic leathers having a PU-based or PVC-based coating layer.

As described generally above, the coating layer and coating mixture can include polyolefin polymers or polyolefin copolymers. The copolymers can be alternating copolymers or random copolymers or block copolymers or graft copolymers. The polyolefin can be an alpha-olefin polymer or an alpha-olefin copolymer. The alpha-olefin includes a double bond at the alpha or primary position, which can enhance the reactivity of the polymer or co-polymer. Reference to polyolefin, polyolefin resin, polyolefin polymer or polyolefin co-polymer is inclusive the alpha-olefin chemical structure. The alpha-olefin polymer or co-polymer can include branched or linear alpha-olefins. The following description describes various types of polyolefins and in particular alpha-olefin polymers and co-polymers.

The polyolefin copolymer can include a plurality of repeat units, with each of the plurality of repeat units individually derived from an alkene monomer having about 1 to about 6 carbon atoms. In other aspects, the polyolefin copolymer includes a plurality of repeat units, with each of the plurality of repeat units individually derived from a monomer selected from the group consisting of ethylene, propylene, 4-methyl-1-pentene, 1-butene, 1-octene, and a combination thereof. In some aspects, the polyolefin copolymer includes a plurality of repeat units each individually selected from Formula 1A-1D. In other aspects, the polyolefin copolymer includes a first plurality of repeat units having a structure according to Formula 1A, and a second plurality of repeat units having a structure selected from Formula 1B-1D.

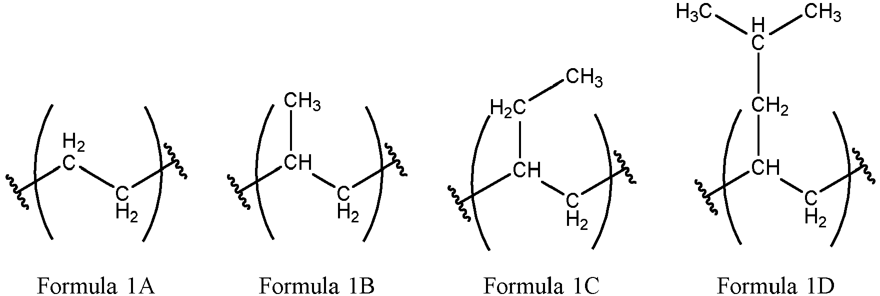

The polyolefin copolymer can include a plurality of repeat units each individually having a structure according to Formula 2 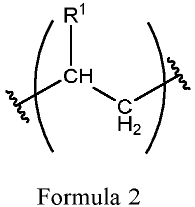 where R¹ is a hydrogen or a substituted or unsubstituted, linear or branched, C₁-C₁₂ alkyl. C₁-C₆ alkyl, C₁-C₃ alkyl, C₁-C₁₂ heteroalkyl, C₁-C₆ heteroalkyl, or C₁-C₃ heteroalkyl. In some aspects, each of the repeat units in the first plurality of repeat units has a structure according to Formula 1A above, and each of the repeat units in the second plurality of repeat units has a structure according to Formula 2 above.

The polyolefin copolymer can be a random copolymer of a first plurality of repeat units and a second plurality of repeat units, and each repeat unit in the first plurality of repeat units is derived from ethylene and the each repeat unit in the second plurality of repeat units is derived from a second olefin. In some aspects, the second olefin is an alkene monomer having about 1 to about 6 carbon atoms. In other aspects, the second olefin includes propylene, 4-methyl-1-pentene, 1-butene, or other linear or branched terminal alkenes having about 3 to 12 carbon atoms. The polyolefin copolymer can contain about 80% to about 99%, about 85% to about 99%, about 90% to about 99%, or about 95% to about 99% polyolefin repeat units by weight based upon a total weight of the polyolefin copolymer. The polyolefin copolymer can consists essentially of polyolefin repeat units. In some aspects, polymers in the coating layer, coating mixture, or coating layer composition consist essentially of polyolefin copolymers.

The polyolefin copolymer can include ethylene, i.e. can include repeat units derived from ethylene such as those in Formula 1A. In some aspects, the polyolefin copolymer includes about 1% to about 5%, about 1% to about 3%, about 2% to about 3%, or about 2% to about 5% ethylene by weight based upon a total weight of the polyolefin copolymer.

The coating layer, including or the coating mixture can be made without the need for polyurethanes and/or without the need for polyamides. For example, the coating mixture can be substantially free of polyurethanes. The polymer chains of the polyolefin polymers or copolymers present in the coating mixture can be substantially free of urethane repeat units. The coating layer or the coating mixture or both can be substantially free of polymer chains including urethane repeat units. The coating layer, the coating mixture, or both can be substantially free of polyamide. The polymer chains of the polyolefin polymers or copolymers present in the coating mixture can substantially free of amide repeat units. The coating layer or the coating mixture or both can be substantially free of polymer chains including amide repeat units.

The polyolefin polymers or copolymers present in the polyolefin resin, in the TPV, or both, can include polypropylene or can be a polypropylene copolymer. The polymeric component of the coating mixture (i.e., the portion of the composition that is formed by all of the polymers present in the coating mixture) can consist essentially of polypropylene polymers or copolymers.

The polypropylene copolymer can include a random copolymer, e.g. a random copolymer of ethylene and propylene. The polypropylene copolymer can include about 80% to about 99%, about 85% to about 99%, about 90% to about 99%, or about 95% to about 99% propylene repeat units by weight based upon a total weight of the polypropylene copolymer. The polypropylene copolymer can include about 1% to about 5%, about 1% to about 3%, about 2% to about 3%, or about 2% to about 5% ethylene by weight based upon a total weight of the polypropylene copolymer. The polypropylene copolymer can be a random copolymer including about 2% to about 3% of a first plurality of repeat units by weight and about 80% to about 99% by weight of a second plurality of repeat units based upon a total weight of the polypropylene copolymer; where each of the repeat units in the first plurality of repeat units has a structure according to Formula 1A above and each of the repeat units in the second plurality of repeat units has a structure according to Formula 1B above.

In general, the polyolefin polymer or polyolefin copolymer can include crystalline regions dispersed throughout an amorphous matrix. The polyolefin polymer or polyolefin copolymer having crystalline regions can be beneficial. The coating layer or the coating mixture or both can have a percent crystallization (% crystallization) of about 45%, about 40%, about 35%, about 30%, about 25% or less when measured according to the Differential Scanning Calorimeter (DSC) Test using the Material Sampling Procedure.

In some aspects, the coating mixture further comprises a polymeric resin modifier. The polymeric resin modifier can be present in the coating mixture in an amount ranging from about 1 percent by weight to about 30 percent by weight, or from about 5 percent by weight to about 20 percent by weight.

The polymeric resin modifier can include a variety of exemplary resin modifiers described herein. The polymeric resin modifier can be a metallocene catalyzed copolymer primarily composed of isotactic propylene repeat units with about 11% by weight-15% by weight of ethylene repeat units based on a total weight of metallocene catalyzed copolymer randomly distributed along the copolymer. The polymeric resin modifier can include about 10% to about 15% ethylene repeat units by weight based upon a total weight of the polymeric resin modifier. The polymeric resin modifier includes about 10% to about 15% repeat units according to Formula 1A above by weight based upon a total weight of the polymeric resin modifier. The polymeric resin modifier is a copolymer of repeat units according to Formula 1B above, and the repeat units according to Formula 1B are arranged in an isotactic stereochemical configuration.

The polymeric resin modifier can be a copolymer containing isotactic propylene repeat units and ethylene repeat units. The polymeric resin modifier is a copolymer including a first plurality of repeat units and a second plurality of repeat units; where each of the repeat units in the first plurality of repeat units has a structure according to Formula 1A above and each of the repeat units in the second plurality of repeat units has a structure according to Formula 1B above, and wherein the repeat units in the second plurality of repeat units are arranged in an isotactic stereochemical configuration.

As used herein, a "thermoplastic vulcanizate" ("TPV") is broadly defined as any material that includes a dispersed, at least partially vulcanized, rubber within a thermoplastic resin. A thermoplastic vulcanizate composition can further include process oil, other ingredients, other additives, and combinations thereof. Thermoplastic vulcanizates can be vulcanized compositions that include finely dispersed crosslinked elastomer particles in a continuous thermoplastic phase. Also, TPVs can be produced by a process called dynamic vulcanization, where the elastomeric component is selectively crosslinked during melt mixing with molten thermoplastics. TPVs have the benefits of the elastomeric properties provided by the elastomer phase and processability provided by the thermoplastic phase.

The "vulcanizate" means a composition that includes some component (e.g., rubber) that has been vulcanized, while the term "vulcanized" is defined herein in its broadest sense, and refers in general to the state of a composition after all or a portion of the composition (e.g., cross-linkable rubber) has been subjected to some degree or amount of vulcanization. Accordingly, the term encompasses both partial and total vulcanization.

One type of vulcanization is "dynamic vulcanization," discussed below, which also produces a "vulcanizate." In at least that context, the term vulcanization encompasses any form of curing (crosslinking), both thermal and chemical, which can be utilized in dynamic vulcanization. The term "dynamic vulcanization" means vulcanization or curing of a curable rubber blended with a thermoplastic resin under conditions of shear at temperatures sufficient to plasticize the mixture. In an aspect, the rubber is simultaneously crosslinked and dispersed as micro-sized particles within the thermoplastic resin. Depending on the degree of cure, the rubber to thermoplastic resin ratio, compatibility of the rubber and thermoplastic resin, the kneader type and the intensity of mixing (shear rate), other morphologies, such as co-continuous rubber phases in the plastic matrix, are possible.

As used herein, a "partially vulcanized" rubber is one wherein at least 5 weight percent of the cross-linkable rubber is extractable in boiling xylene, subsequent to vulcanization (preferably dynamic vulcanization), e.g., crosslinking of the rubber phase of the thermoplastic vulcanizate. For example, in a thermoplastic vulcanizate comprising a partially vulcanized rubber at least 5 weight percent and less than 20 weight percent, or 30 weight percent, or 50 weight percent of the cross-linkable rubber can be extractable from the specimen of the thermoplastic vulcanizate in boiling xylene. The percentage of extractable rubber can be determined by the technique set forth in U. S. Patent Nos. 4,311,628; 5, 100,947, and 5,157,081.

As used herein, a "fully vulcanized" rubber is one wherein less than 5 weight percent of the crosslinkable rubber is extractable in boiling xylene, subsequent to vulcanization (preferably dynamic vulcanization), e.g., crosslinking of the rubber phase of the thermoplastic vulcanizate. For example, in a thermoplastic vulcanizate comprising a fully vulcanized rubber less than 5 weight percent, or less than 3 weight percent, or less than 2 weight percent, or less than 1 weight percent of the crosslinkable rubber can be extractable from the specimen of the thermoplastic vulcanizate in boiling xylene.

The TPVs described herein comprise a rubber. The term "rubber(s)" and "rubber component" may be used interchangeably herein with the term "elastomer(s)". The term "rubber component" refers to any natural or synthetic polymer, which can be vulcanized or vulcanized so as to exhibit elastomeric properties. Exemplary rubbers for use in the TPVs can include unsaturated non-polar elastomers, such as monoolefin copolymer elastomers comprising non-polar elastomer copolymers of two or more monoolefins (for example, EP elastomers), which may be copolymerized with at least one polyene, usually a diene (for example, EPDM elastomers). EPDM (ethylene-propylene-diene elastomer) is a polymer of ethylene, propylene, and one or more non-conjugated diene(s). Non-conjugated dienes can include 5-ethylidene-2- norbomene ("ENB"); 1 ,4-hexadiene; 5-methylene-2-norbomene; 1,6-octadiene; 5-methyl- 1,4-hexadiene; 3,7-dimethyl-l,6-octadiene; 1,3-cyclopentadiene; 1 ,4-cyclohexadiene; dicyclopentadiene ("DCPD"); 5-vinyl-2-norbornene ("VNB"); divinyl benzene, or combinations thereof. Such elastomers have the ability to produce TPVs with a cure state generally in excess of about 95% while maintaining physical properties attributable to the crystalline or semi-crystalline polymer.

The rubber component of the TPV can include an elastomeric copolymer that contains about 20 to about 90 mole percent ethylene-derived units. These copolymers can contain about 40 to about 85 mole percent, or about 50 to about 80 mole percent ethylene-derived units. Furthermore, where the copolymers can contain diene-derived units, the diene-derived units may be present in an amount of about 0.1 to about 5 mole percent, or about 0.1 to about 4 mole percent, or about 0.15 to about 2.5 mole percent. The balance of the copolymer will generally be made up of units derived from alpha-olefin monomers, such as propylene-derived units. Accordingly, the copolymer may contain about 10 to about 80 mole percent, or about 15 to about 50 mole percent, or about 20 to about 40 mole percent alpha-olefin derived-units. The foregoing mole percentages are based upon the total moles of the polymer.

The vulcanizable rubber can also be natural rubber or synthetic homo- or copolymers of at least one conjugated diene with an aromatic monomer, such as styrene, or a polar monomer such as acrylonitrile or alkyl-substituted acrylonitrile monomer(s) having from 3 to 8 carbon atoms. Other synthetic elastomers can include repeat units from monomers having unsaturated carboxylic acids, unsaturated dicarboxylic acids, unsaturated anhydrides of dicarboxylic acids, and include divinylbenzene, alkylacrylates, and other monomers having from 3 to 20 carbon atoms.

The synthetic elastomer can be nonpolar or polar depending on the comonomers. Examples of synthetic elastomers include synthetic polyisoprene, polybutadiene elastomer, styrene-butadiene elastomer (SBR), butadiene-acrylonitrile elastomer, etc. Amine-functionalized, carboxy-functionalized or epoxy-functionalized synthetic elastomers may be used, and examples of these include maleated EPDM, and epoxy-functionalized natural elastomers. Non-polar elastomers are preferred; polar elastomers may be used but may require the use of one or more compatibilizers, as is well known to those skilled in the art.

Additional, elastomers for use in the TPVs described herein may also include hydrogenated styrenic triblock copolymer elastomers, exemplified by SEBS (styrene/ethylenebutylene/styrene), SEPS (styrene/ethylene-propylene/styrene), and SEEPS (styrene/ethyleneethylene-propylene/styrene). Hydrogenated styrenic triblock copolymers may include crosslinkable styrenic blocks, which, in combination with the crosslinkable midblocks, may afford greater overall crosslinking of the vulcanized elastomer within the TPV.

The rubber compound includes at least some level of curing, but is generally at least partially cured. Or stated another way, the rubber compound can be at least partially cured.

As used herein, the term "partially cured" generally refers to a compound (e.g., a rubber compound) having a relatively low crosslink density of less than or equal to 10⁻³ moles/cm³, or less than or equal to 10⁻⁵ moles cm³. For example, the partially cured polymeric compound can have about 15 to about 1500 monomer units present between crosslinks. Dynamic mechanical analysis (DMA) can be used to determine the modulus plateau for the compound. In the region of the modulus plateau above the glass transition temperature of the compound and below the melting point of the compound, the crosslink density is directly proportional to the modulus of the compound.

As used herein, the term "cured" generally refers to a compound (e.g., a rubber compound) having a relatively high crosslink density. For example, the crosslink density of the cured compound can be at least 20 percent greater, or at least 30 percent greater, or at least 50 percent greater than the crosslink density of the uncured or partially cured compound.

Examples of crosslinking reactions (i.e., vulcanization reactions) include, but are not limited to, free-radical reactions, ionic reactions (both anionic and cationic), addition reactions, and metal salt reactions. Crosslinking reactions can be initiated by actinic radiation, including heat, UV, electron beam or other high energy sources.

The TPV can include about 15 weight percent to about 95 weight percent, or about 30 weight percent to about 90 weight percent, or about 45 weight percent to about 90 weight percent, or about 50 weight percent to about 90 weight percent, or about 60 weight percent to about 88 weight percent of the rubber in the total composition.

The rubber compounds can optionally further include fillers; process oils; and/or a curing package including at least one of crosslinking initiator(s), crosslinking accelerator(s), and crosslinking retarder(s). Examples of fillers include, but are not limited to, carbon black, silica, and talc. Examples of process oils include, but are not limited to, paraffin oil and/or aromatic oils. Examples of crosslinking initiators include, but are not limited to, sulfur or peroxide initiators such as di-t-amyl peroxide, di-t-butyl peroxide, t-butyl cumyl peroxide, di-cumyl peroxide (DCP), di(2-methyl-1-phenyl-2-propyl)peroxide, t-butyl 2-methyl-1-phenyl-2-propyl peroxide, di(t-buylperoxy)-diisopropylbenzene, 2,5-dimethyl-2,5-di(t-butylperoxy)hexane, 2,5-dimethyl-2,5-di(t-butylperoxy)hexyne-3,1,1-di(t-butylperoxy)-3,3,5-trimethylcyclohexane, 4,4-di(t-butylperoxy)-n-butylvalerate, and mixtures thereof. Examples of crosslinking accelerators include, but are not limited to, N-cyclohexyl-2-benzothiazole sulfenamide (CBZ), N-oxydiethylene-2-benzothiazole sulfenamide, N,N-diisopropyl-2-benzothiazole sulfenamide, 2-mercaptobenzothiazole, 2-(2,4-dinitrophenyl)mercaptobenzothiazole, 2-(2,6-diethyl-4-morpholinothio)benzothiazole and dibenzothiazyl disulfide; guanidine compounds, such as diphenylguanidine (DPG), triphenylguanidine, diorthonitrileguanidine, orthonitrile biguanide and diphenylguanidine phthalate; aldehyde amine compounds or aldehyde ammonia compounds, such as acetaldehyde-aniline reaction product, butylaldehyde-aniline condensate, hexamethylenetetramine and acetaldehyde ammonia; imidazoline compounds, such as 2-mercaptoimidazoline; thiourea compounds, such as thiocarbanilide, diethylthiourea, dibutylthiourea, trimethylthiourea and diorthotolylthiourea; thiuram compounds, such as tetramethylthiuram monosulfide, tetramethylthiuram disulfide, tetraethylthiuram disulfide, tetrabutylthiuram disulfide and pentamethylenethiuram tetrasulfide; dithioate compounds, such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium dimethyldithiocarbamate; xanthate compounds, such as zinc dibutylxanthogenate; and other compounds, such as zinc white. Examples of crosslinking retarders include, but are not limited to, alkoxyphenols, catechols, and benzoquinones, and alkoxyphenols such as 3,5-di-t-butyl-4-hydroxyanisol.

### Thermoplastic Polymers

In various aspects, disclosed herein are compositions and materials, e.g., polymeric textiles, coating layers, coating mixtures, resin compositions, fibers, filaments, yarns, and protective or decorative layers that comprise one or more thermoplastic polymers. The thermoplastic polymer utilize in preparation of the disclosed compositions and materials can include polymers of the same or different types of monomers (e.g., homopolymers and copolymers, including terpolymers). In certain aspects, the thermoplastic polymer can include different monomers randomly distributed in the polymer (e.g., a random co-polymer). The term "polymer" refers to a polymerized molecule having one or more monomer species that can be the same or different. When the monomer species are the same, the polymer can be termed homopolymer and when the monomers are different, the polymer can be referred to as a copolymer. The term "copolymer" is a polymer having two or more types of monomer species, and includes terpolymers (i.e., copolymers having three monomer species). In an aspect, the "monomer" can include different functional groups or segments, but for simplicity is generally referred to as a monomer.

For example, the thermoplastic polymer can be a polymer having repeating polymeric units of the same chemical structure (segments) which are relatively harder (hard segments), and repeating polymeric segments which are relatively softer (soft segments). In various aspects, the polymer has repeating hard segments and soft segments, physical crosslinks can be present within the segments or between the segments or both within and between the segments. Particular examples of hard segments include isocyanate segments. Particular examples of soft segments include an alkoxy group such as polyether segments and polyester segments. As used herein, the polymeric segment can be referred to as being a particular type of polymeric segment such as, for example, an isocyanate segment (e.g., diisocyante segment), an alkoxy polyamide segment (e.g., a polyether segment, a polyester segment). It is understood that the chemical structure of the segment is derived from the described chemical structure. For example, an isocyanate segment is a polymerized unit including an isocyanate functional group. When referring to polymeric segments of a particular chemical structure, the polymer can contain up to 10 mol % of segments of other chemical structures. For example, as used herein, a polyether segment is understood to include up to 10 mol % of non-polyether segments.

### Thermoplastic Polyurethanes

In certain aspects, the thermoplastic polymer can be a thermoplastic polyurethane (also referred to as "TPU"). In aspects, the thermoplastic polyurethane can be a thermoplastic polyurethane polymer. In such aspects, the thermoplastic polyurethane polymer can include hard and soft segments. In aspects, the hard segments can comprise or consist of isocyanate segments (e.g., diisocyanate segments). In the same or alternative aspects, the soft segments can comprise or consist of alkoxy segments (*e.g.*, polyether segments, or polyester segments, or a combination of polyether segments and polyester segments). In a particular aspect, the thermoplastic material can comprise or consist essentially of an elastomeric thermoplastic polyurethane having repeating hard segments and repeating soft segments.

### Thermoplastic Polyamides

In various aspects, the thermoplastic polymer can comprise a thermoplastic polyamide. The thermoplastic polyamide can be a polyamide homopolymer having repeating polyamide segments of the same chemical structure. Alternatively, the polyamide can comprise a number of polyamide segments having different polyamide chemical structures (*e.g.*, polyamide 6 segments, polyamide 11 segments, polyamide 12 segments, polyamide 66 segments, etc.). The polyamide segments having different chemical structure can be arranged randomly, or can be arranged as repeating blocks.

In aspects, the thermoplastic polymers can be a block co-polyamide. For example, the block co-polyamide can have repeating hard segments, and repeating soft segments. The hard segments can comprise polyamide segments, and the soft segments can comprise non-polyamide segments. The thermoplastic polymers can be an elastomeric thermoplastic co-polyamide comprising or consisting of block co-polyamides having repeating hard segments and repeating soft segments. In block co-polymers, including block co-polymers having repeating hard segments and soft segments, physical crosslinks can be present within the segments or between the segments or both within and between the segments.

The thermoplastic polyamide can be a co-polyamide (i.e., a co-polymer including polyamide segments and non-polyamide segments). The polyamide segments of the co-polyamide can comprise or consist of polyamide 6 segments, polyamide 11 segments, polyamide 12 segments, polyamide 66 segments, or any combination thereof. The polyamide segments of the co-polyamide can be arranged randomly, or can be arranged as repeating segments. In a particular example, the polyamide segments can comprise or consist of polyamide 6 segments, or polyamide 12 segments, or both polyamide 6 segment and polyamide 12 segments. In the example where the polyamide segments of the co-polyamide include of polyamide 6 segments and polyamide 12 segments, the segments can be arranged randomly. The non-polyamide segments of the co-polyamide can comprise or consist of polyether segments, polyester segments, or both polyether segments and polyester segments. The co-polyamide can be a co-polyamide, or can be a random co-polyamide. The thermoplastic copolyamide can be formed from the polycodensation of a polyamide oligomer or prepolymer with a second oligomer prepolymer to form a copolyamide (i.e., a co-polymer including polyamide segments. Optionally, the second prepolymer can be a hydrophilic prepolymer.

In some aspects, the thermoplastic polyamide itself, or the polyamide segment of the thermoplastic copolyamide can be derived from the condensation of polyamide prepolymers, such as lactams, amino acids, and/or diamino compounds with dicarboxylic acids, or activated forms thereof. The resulting polyamide segments include amide linkages (-(CO)NH-). The term "amino acid" refers to a molecule having at least one amino group and at least one carboxyl group. Each polyamide segment of the thermoplastic polyamide can be the same or different.

In some examples, the thermoplastic polyamide is physically crosslinked through, e.g., nonpolar or polar interactions between the polyamide groups of the polymers. In examples where the thermoplastic polyamide is a thermoplastic copolyamide, the thermoplastic copolyamide can be physically crosslinked through interactions between the polyamide groups, an optionally by interactions between the copolymer groups. When the thermoplastic copolyamide is physically crosslinked thorough interactions between the polyamide groups, the polyamide segments can form the portion of the polymer referred to as the "hard segment", and copolymer segments can form the portion of the polymer referred to as the "soft segment". For example, when the thermoplastic copolyamide is a thermoplastic poly(ether-block-amide), the polyamide segments form the hard segment portion of the polymer, and polyether segments can form the soft segment portion of the polymer. Therefore, in some examples, the thermoplastic polymer can include a physically crosslinked polymeric network having one or more polymer chains with amide linkages.

In some aspects, the polyamide segment of the thermoplastic co-polyamide includes polyamide-11 or polyamide-12 and the polyether segment is a segment selected from the group consisting of polyethylene oxide, polypropylene oxide, and polytetramethylene oxide segments, and combinations thereof.

Optionally, the thermoplastic polyamide can be partially covalently crosslinked, as previously described herein. In such cases, it is to be understood that the degree of crosslinking present in the thermoplastic polyamide is such that, when it is thermally processed in the form of a yarn or fiber to form the articles of footwear of the present disclosure, the partially covalently crosslinked thermoplastic polyamide retains sufficient thermoplastic character that the partially covalently crosslinked thermoplastic polyamide is softened or melted during the processing and re-solidifies.

### Thermoplastic Polyesters

In aspects, the thermoplastic polymers can comprise a thermoplastic polyester. The thermoplastic polyester can be formed by reaction of one or more carboxylic acids, or its ester-forming derivatives, with one or more bivalent or multivalent aliphatic, alicyclic, aromatic or araliphatic alcohols or a bisphenol. The thermoplastic polyester can be a polyester homopolymer having repeating polyester segments of the same chemical structure. Alternatively, the polyester can comprise a number of polyester segments having different polyester chemical structures (*e.g.*, polyglycolic acid segments, polylactic acid segments, polycaprolactone segments, polyhydroxyalkanoate segments, polyhydroxybutyrate segments, etc.). The polyester segments having different chemical structure can be arranged randomly, or can be arranged as repeating blocks.

Exemplary carboxylic acids that that can be used to prepare a thermoplastic polyester include, but are not limited to, adipic acid, pimelic acid, suberic acid, azelaic acid, sebacic acid, nonane dicarboxylic acid, decane dicarboxylic acid, undecane dicarboxylic acid, terephthalic acid, isophthalic acid, alkyl-substituted or halogenated terephthalic acid, alkyl-substituted or halogenated isophthalic acid, nitro-terephthalic acid, 4,4'-diphenyl ether dicarboxylic acid, 4,4'-diphenyl thioether dicarboxylic acid, 4,4'-diphenyl sulfone-dicarboxylic acid, 4,4'-diphenyl alkylenedicarboxylic acid, naphthalene-2,6-dicarboxylic acid, cyclohexane-1,4-dicarboxylic acid and cyclohexane-1,3-dicarboxylic acid. Exemplary diols or phenols suitable for the preparation of the thermoplastic polyester include, but are not limited to, ethylene glycol, diethylene glycol, 1,3-propanediol, 1,4-butanediol, 1,6-hexanediol, 1,8-octanediol, 1,10-decanediol, 1,2-propanediol, 2,2-dimethyl-1,3-propanediol, 2,2,4-trimethylhexanediol, p-xylenediol, 1,4-cyclohexanediol, 1,4-cyclohexane dimethanol, and bis-phenol A.

In some aspects, the thermoplastic polyester is a polybutylene terephthalate (PBT), a polytrimethylene terephthalate, a polyhexamethylene terephthalate, a poly-1,4-dimethylcyclohexane terephthalate, a polyethylene terephthalate (PET), a polyethylene isophthalate (PEI), a polyarylate (PAR), a polybutylene naphthalate (PBN), a liquid crystal polyester, or a blend or mixture of two or more of the foregoing.

The thermoplastic polyester can be a co-polyester (i.e., a co-polymer including polyester segments and non-polyester segments). The co-polyester can be an aliphatic co-polyester (i.e., a co-polyester in which both the polyester segments and the non-polyester segments are aliphatic). Alternatively, the co-polyester can include aromatic segments. The polyester segments of the co-polyester can comprise or consist of polyglycolic acid segments, polylactic acid segments, polycaprolactone segments, polyhydroxyalkanoate segments, polyhydroxybutyrate segments, or any combination thereof. The polyester segments of the co-polyester can be arranged randomly, or can be arranged as repeating blocks.

For example, the thermoplastic polyester can be a block co-polyester having repeating blocks of polymeric units of the same chemical structure (segments) which are relatively harder (hard segments), and repeating blocks of polymeric segments which are relatively softer (soft segments). In block co-polyesters, including block co-polyesters having repeating hard segments and soft segments, physical crosslinks can be present within the blocks or between the blocks or both within and between the blocks. In a particular example, the thermoplastic material can comprise or consist essentially of an elastomeric thermoplastic co-polyester having repeating blocks of hard segments and repeating blocks of soft segments.

The non-polyester segments of the co-polyester can comprise or consist of polyether segments, polyamide segments, or both polyether segments and polyamide segments. The co-polyester can be a block co-polyester, or can be a random co-polyester. The thermoplastic co-polyester can be formed from the polycodensation of a polyester oligomer or prepolymer with a second oligomer prepolymer to form a block copolyester. Optionally, the second prepolymer can be a hydrophilic prepolymer. For example, the co-polyester can be formed from the polycondensation of terephthalic acid or naphthalene dicarboxylic acid with ethylene glycol, 1,4-butanediol, or 1-3 propanediol. Examples of co-polyesters include polyethelene adipate, polybutylene succinate, poly(3-hydroxbutyrate-co-3-hydroxyvalerate), polyethylene terephthalate, polybutylene terephthalate, polytrimethylene terephthalate, polyethylene napthalate, and combinations thereof. In a particular example, the co-polyamide can comprise or consist of polyethylene terephthalate.

In some aspects, the thermoplastic polyester is a block copolymer comprising segments of one or more of polybutylene terephthalate (PBT), a polytrimethylene terephthalate, a polyhexamethylene terephthalate, a poly-1,4-dimethylcyclohexane terephthalate, a polyethylene terephthalate (PET), a polyethylene isophthalate (PEI), a polyarylate (PAR), a polybutylene naphthalate (PBN), and a liquid crystal polyester. For example, a suitable thermoplastic polyester that is a block copolymer can be a PET/PEI copolymer, a polybutylene terephthalate/tetraethylene glycol copolymer, a polyoxyalkylenediimide diacid/polybutylene terephthalate copolymer, or a blend or mixture of any of the foregoing.

In some aspects, the thermoplastic polyester is a biodegradable resin, for example, a copolymerized polyester in which poly(α-hydroxy acid) such as polyglycolic acid or polylactic acid is contained as principal repeating units.

The disclosed thermoplastic polyesters can be prepared by a variety of polycondensation methods known to the skilled artisan, such as a solvent polymerization or a melt polymerization process.

### Thermoplastic Polyolefins

In some aspects, the thermoplastic polymers can comprise or consist essentially of a thermoplastic polyolefin. Exemplary of thermoplastic polyolefins useful can include, but are not limited to, polyethylene, polypropylene, and thermoplastic olefin elastomers (*e.g*., metallocene-catalyzed block copolymers of ethylene and α-olefins having 4 to about 8 carbon atoms). In a further aspect, the thermoplastic polyolefin is a polymer comprising a polyethylene, an ethylene-α-olefin copolymer, an ethylene-propylene rubber (EPDM), a polybutene, a polyisobutylene, a poly-4-methylpent-1-ene, a polyisoprene, a polybutadiene, an ethylene-methacrylic acid copolymer, and an olefin elastomer such as a dynamically cross-linked polymer obtained from polypropylene (PP) and an ethylene-propylene rubber (EPDM), and blends or mixtures of the foregoing. Further exemplary thermoplastic polyolefins useful in the disclosed compositions, yarns, and fibers are polymers of cycloolefins such as cyclopentene or norbornene.

It is to be understood that polyethylene, which optionally can be crosslinked, is inclusive a variety of polyethylenes, including, but not limited to, low density polyethylene (LDPE), linear low density polyethylene (LLDPE), (VLDPE) and (ULDPE), medium density polyethylene (MDPE), high density polyethylene (HDPE), high density and high molecular weight polyethylene (HDPE-HMW), high density and ultrahigh molecular weight polyethylene (HDPE-UHMW), and blends or mixtures of any the foregoing polyethylenes. A polyethylene can also be a polyethylene copolymer derived from monomers of monolefins and diolefins copolymerized with a vinyl, acrylic acid, methacrylic acid, ethyl acrylate, vinyl alcohol, and/or vinyl acetate. Polyolefin copolymers comprising vinyl acetate-derived units can be a high vinyl acetate content copolymer, e.g., greater than about 50 wt% vinyl acetate-derived composition.

In some aspects, the thermoplastic polyolefin, as disclosed herein, can be formed through free radical, cationic, and/or anionic polymerization by methods well known to those skilled in the art (*e.g*., using a peroxide initiator, heat, and/or light). In a further aspect, the disclosed thermoplastic polyolefin can be prepared by radical polymerization under high pressure and at elevated temperature. Alternatively, the thermoplastic polyolefin can be prepared by catalytic polymerization using a catalyst that normally contains one or more metals from group IVb, Vb, Vlb or VIII metals. The catalyst usually has one or more than one ligand, typically oxides, halides, alcoholates, esters, ethers, amines, alkyls, alkenyls and/or aryls that can be either p- or s-coordinated complexed with the group IVb, Vb, Vlb or VIII metal. In various aspects, the metal complexes can be in the free form or fixed on substrates, typically on activated magnesium chloride, titanium (III) chloride, alumina, or silicon oxide. It is understood that the metal catalysts can be soluble or insoluble in the polymerization medium. The catalysts can be used by themselves in the polymerization or further activators can be used, typically a group la, Ila and/or IIIa metal alkyls, metal hydrides, metal alkyl halides, metal alkyl oxides or metal alkyloxanes. The activators can be modified conveniently with further ester, ether, amine or silyl ether groups.

Suitable thermoplastic polyolefins can be prepared by polymerization of monomers of monolefins and diolefins as described herein. Exemplary monomers that can be used to prepare disclosed thermoplastic polyolefin include, but are not limited to, ethylene, propylene, 1-butene, 1-pentene, 1-hexene, 2-methyl-1-propene, 3-methyl-1-pentene, 4-methyl-1-pentene, 5-methyl-1-hexene and mixtures thereof.

Suitable ethylene-α-olefin copolymers can be obtained by copolymerization of ethylene with an α-olefin such as propylene, butene-1, hexene-1, octene-1,4-methyl-1-pentene having carbon numbers of 3 to 12.

Suitable dynamically cross-linked polymers can be obtained by cross-linking a rubber component as a soft segment while at the same time physically dispersing a hard segment such as PP and a soft segment such as EPDM by using a kneading machine such as a Banbury mixer and a biaxial extruder.

In some aspects, the thermoplastic polyolefin can be a mixture of thermoplastic polyolefins, such as a mixture of two or more polyolefins disclosed herein above. For example, a suitable mixture of thermoplastic polyolefins can be a mixture of polypropylene with polyisobutylene, polypropylene with polyethylene (for example PP/HDPE, PP/LDPE) or mixtures of different types of polyethylene (for example LDPE/HDPE).

In some aspects, the thermoplastic polyolefin can be a copolymer of suitable monolefin monomers or a copolymer of a suitable monolefin monomer and a vinyl monomer. Exemplary thermoplastic polyolefin copolymers include, but are not limited to, ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

In some aspects, the thermoplastic polyolefin can be a polypropylene homopolymer, a polypropylene copolymers, a polypropylene random copolymer, a polypropylene block copolymer, a polyethylene homopolymer, a polyethylene random copolymer, a polyethylene block copolymer, a low density polyethylene (LDPE), a linear low density polyethylene (LLDPE), a medium density polyethylene, a high density polyethylene (HDPE), or blends or mixtures of one or more of the preceding polymers.

In some aspects, the polyolefin is a polypropylene. The term "polypropylene," as used herein, is intended to encompass any polymeric composition comprising propylene monomers, either alone or in mixture or copolymer with other randomly selected and oriented polyolefins, dienes, or other monomers (such as ethylene, butylene).

Such a term also encompasses any different configuration and arrangement of the constituent monomers (such as atactic, syndiotactic, isotactic).

Thus, the term as applied to fibers is intended to encompass actual long strands, tapes, threads, of drawn polymer. The polypropylene can be of any standard melt flow (by testing); however, standard fiber grade polypropylene resins possess ranges of Melt Flow Indices between about 1 and 1000.

In some aspects, the polyolefin is a polyethylene. The term " polyethylene," as used herein, is intended to encompass any polymeric composition comprising ethylene monomers, either alone or in mixture or copolymer with other randomly selected and oriented polyolefins, dienes, or other monomers (such as propylene, butylene).

Such a term also encompasses any different configuration and arrangement of the constituent monomers (such as atactic, syndiotactic, isotactic).

Thus, the term as applied to fibers is intended to encompass actual long strands, tapes, threads of drawn polymer. The polyethylene can be of any standard melt flow (by testing); however, standard fiber grade polyethylene resins possess ranges of Melt Flow Indices between about 1 and 1000.

### Coating Mixture

The coating layer includes a coating mixture. The coating mixture is a polymeric composition comprising the polyolefin resin and the TPV. Optionally, the coating mixture can further comprise one or more non-polymeric additives such as fillers or pigments or both. Optionally, the coating mixture can further comprise one or more polymeric additives such as a polymeric resin modifier. The polymeric resin modifier can provide improved flexural durability, flexural strength, toughness, creep resistance, or flexural durability. In some examples, the polymeric resin modifier can improve these flexural properties while maintaining a suitable abrasion resistance.

The resin compositions provided herein can be made by mixing the polyolefin resin and the TPV to form a blended resin composition. Methods of blending polymers can include film blending in a press, blending in a mixer (e.g. mixers commercially available under the tradename "HAAKE" from Thermo Fisher Scientific, Waltham, MA), solution blending, hot melt blending, and extruder blending. In some aspects, the polyolefin resin and the TPV are miscible such that they can be readily mixed by the screw in the injection barrel during injection molding, e.g. without the need for a separate blending step.

The methods can further include extruding the blended resin composition to form an extruded resin composition. The methods of extruding the blended resin can include manufacturing long products of relatively constant cross-section (e.g., rods, sheets, pipes, films, wire insulation coating). The methods of extruding the blended resin can include conveying a softened blended resin composition through a die with an opening. The blended resin can be conveyed forward by a feeding screw and forced through the die. Heating elements, placed over the barrel, can soften and melt the blended resin. The temperature of the material can be controlled by thermocouples. The product going out of the die can be cooled by blown air or in a water bath to form the extruded resin composition. Alternatively, the product going out of the die can be pelletized with little cooling as described below.

The method can further include pelletizing the extruded resin composition to form a pelletized resin composition. Methods of pelletizing can include melt pelletizing (hot cut) whereby the melt coming from a die is almost immediately cut into pellets that are conveyed and cooled by liquid or gas. Methods of pelletizing can include strand pelletizing (cold cut) whereby the melt coming from the die head is converted into strands (the extruded resin composition) that are cut into pellets after cooling and solidification.

The method can further include injection molding the pelletized resin composition to form the coating layer. The injection molding can include the use of a non-rotating, cold plunger to force the pelletized resin through a heated cylinder wherein the resin composition is heated by heat conducted from the walls of the cylinder to the resin composition. The injection molding can include the use of a rotating screw, disposed co-axially of a heated barrel, for conveying the pelletized resin composition toward a first end of the screw and to heat the resin composition by the conduction of heat from the heated barrel to the resin composition. As the resin composition is conveyed by the screw mechanism toward the first end, the screw is translated toward the second end so as to produce a reservoir space at the first end. When sufficient melted resin composition is collected in the reservoir space, the screw mechanism can be pushed toward the first end so as to inject the material into a selected mold.

### Methods of Making Components and Articles

The disclosure provides several methods for making components and articles described herein. The methods can include extruding a resin composition, such as the coating mixture described herein, onto a textile layer to form a composite textile. The disclosure provides methods for manufacturing a component for an article of footwear or sporting equipment, by extruding a resin composition described herein, including a coating mixture or coating layer as described herein, and bonding the resin composition to a textile layer, forming a coating layer bonded to the textile layer (i.e., a composite textile).

The methods can further include affixing the composite textile to a second element. The second element can include a footwear component, such as a heel counter, a midsole, one or more eyestays, a lining, an outsole. For example, the second element can include a sole structure. The second element can include a polymeric foam component, an injection molded polymer component, or a vulcanized rubber component, a film component, or a textile component. The polymeric foam, the injection molded polymer, the vulcanized rubber, the film, or the textile of the component can comprise a polyolefin.

In some aspects, the method includes applying an adhesive composition, such as a hot melt adhesive composition or a curing adhesive composition, to a side or outer layer of the composite textile, the second element, or both. In other aspects, the polyolefin resin is present on a side or outer layer of the second element, and the method includes affixing the polyolefins resin of the second element and the polyolefins resin of the composite textile together.

Affixing the composite textile to the second element can include forming a bond, including a mechanical bond or an intermingled bond, between the composite textile (e.g., between the coating layer or the textile layer) and the second element. A mechanical bond is understood to be a bond formed by a mechanical interaction between a surface of the composite textile and the second element, while an intermingled bond is understood to be a bond formed by chemical interaction of the materials on the outer surfaces of the composite textile and the second element. For example, intermingling of polymeric materials from the composite textile with polymeric materials from the second element, such as can occur when one or both of the polymeric materials is softened or melted, is an example of an intermingled bond. Forming chemical bonds between a polymeric material of the composite textile and a polymeric material of the second element, such as crosslinking bonds formed during a curing process, is another example of an intermingled bond. Forming the bond (i.e., a mechanical bond or an intermingled bond) can include forming a bond using a resin composition, such as a thermoplastic resin composition, including a thermoplastic polyolefin resin composition. The resin composition can be initially present as an outer layer of the composite textile, or of the second element, or can be a liquid, film or fibers applied to the interface between the composite textile and the second element.

In one aspect, affixing the composite textile to the second element can include (i) disposing the resin composition to an interface between the composite textile and the second element, (ii) increasing a temperature of the resin composition to a first temperature above a melting or softening temperature of the resin composition, (iii) applying pressure to the interface, or contacting the composite textile and the second element, or both, while the resin composition is at the first temperature, and (iv) continuing to apply pressure to the interface, or keeping the composite textile and the second element in contact with each other, or both, while decreasing the temperature of the resin composition to a second temperature below the melting or softening temperature of the resin composition, thereby forming a bond (i.e., a mechanical bond or an intermingled bond) between the composite textile and the second element. Affixing the composite textile to the second element can include directly injecting a resin composition onto the composite textile. In some aspects, the resin composition is present on a surface of the second element, and the melting or softening temperature of the resin composition is a softening temperature of the resin composition, and is a temperature below a melting or softening temperature of the coating layer, or is a temperature below a melting or softening temperature of the textile layer, or is a temperature below both.

In another aspect, affixing the composite textile to the second element can include (i) disposing an uncured resin composition between the composite textile and the second element, (ii) applying pressure to the interface between the composite textile and the second element while the resin composition is at the interface, and (iii) keeping pressure on the interface or the composite textile and the second element in contact with each other while curing the resin composition to solidify the resin composition, thereby forming a bond (i.e., a mechanical bond or an intermingled bond) between the composite textile and the second element, which the polymers of the composite textile and the second element do not intermingle or crosslink with each other.

The second element can comprise a thermoplastic material, and affixing the component to the second element can include (i) increasing a temperature of the thermoplastic material to a first temperature above a melting or softening point of the thermoplastic material, (ii) the composite textile and the second element while the thermoplastic material is at the first temperature, and (iii) keeping the composite textile and the second element in contact with each other while decreasing the temperature of the thermoplastic polymeric material to a second temperature below the melting or softening point of the thermoplastic polymeric material, forming a mechanical bond between the composite textile and the second element.

The composite textile can comprise a first thermoplastic material (e.g., a thermoplastic coating layer or thermoplastic coating mixture) and the second element can include a second thermoplastic material, and affixing the composite textile to the second element can include (i) increasing a temperature of both the first thermoplastic material and the second thermoplastic material to a first temperature above both a melting or softening point of the first thermoplastic material and a melting or softening point of the second thermoplastic material, (ii) contacting the composite textile and the second element while both the first thermoplastic material and the second thermoplastic material are at the first temperature, and (iii) keeping the composite textile and the second element in contact with each other while decreasing the temperature of both the first thermoplastic material and the second thermoplastic material to a second temperature below both the melting or softening point of the first thermoplastic material and the melting or softening point of the second thermoplastic material, melding at least a portion of the first thermoplastic material and the second thermoplastic material with each other, thereby forming an intermingled bond between the composite textile and the second element.

### Property Analysis and Characterization Procedure

### Cold Ross Flex Test

The cold Ross flex test is determined according the following test method. The purpose of this test is to evaluate the resistance to cracking of a sample under repeated flexing to 60 degrees in a cold environment. A thermoformed plaque of the material for testing is sized to fit inside the flex tester machine. Each material is tested as five separate samples. The flex tester machine is capable of flexing samples to 60 degrees at a rate of 100 +/- 5 cycles per minute. The mandrel diameter of the machine is 10 millimeters. Suitable machines for this test are the Emerson AR-6, the Satra S Tₘ 141F, the Gotech GT-7006, and the Shin II Scientific SI-LTCO (DaeSung Scientific). The sample(s) are inserted into the machine according to the specific parameters of the flex machine used. The machine is placed in a freezer set to -6 °C for the test. The motor is turned on to begin flexing with the flexing cycles counted until the sample cracks. Cracking of the sample means that the surface of the material is physically split. Visible creases of lines that do not actually penetrate the surface are not cracks. The sample is measured to a point where it has cracked but not yet broken in two.

### Abrasion Loss Test ASTM D 5963-97a

Abrasion loss is tested on cylindrical test pieces with a diameter of 16±0.2 mm and a minimum thickness of 6 mm cut from sheets using a ASTM standard hole drill. The abrasion loss is measured using Method B of ASTM D 5963-97a on a Gotech GT-7012-D abrasion test machine. The tests are performed as 22°C with an abrasion path of 40 meters. The Standard Rubber #1 used in the tests has a density of 1.336 grams per cubic centimeter (g/cm³). The smaller the abrasion loss volume, the better the abrasion resistance.

### Differential Scanning Calorimeter (DSC) Test

To determine percent crystallinity of a resin composition including a copolymer and a polymeric resin modifier, samples of the copolymer, the resin composition, and of a homopolymer of the main component of the copolymer (e.g., polypropylene homopolymer polypropylene) are all analyzed by differential scanning calorimetry (DSC) over the temperature range from -80 °C to 250°C. A heating rate of 10 °C per minute is used. The melting endotherm is measured for each sample during heating. Universal Analysis software (TA Instruments, New Castle, DE, USA) is used to calculate percent crystallinity (% crystallinity) based upon the melting endotherm for the homopolymer (e.g., 207 Joules per gram for 100% crystalline polypropylene material). Specifically, the percent crystallinity (% crystallinity) is calculated by dividing the melting endotherm measured for the copolymer or for the resin composition by the 100% crystalline homopolymer melting endotherm.

### Method to Determine the Vicat Softening Temperature Tᵥₛ.

The Vicat softening temperature Tᵥₛ is be determined according to the test method detailed in AS Tₘ D1525-09 Standard Test Method for Vicat Softening Temperature of Plastics, preferably using Load A and Rate A. Briefly, the Vicat softening temperature is the temperature at which a flat-ended needle penetrates the specimen to the depth of 1 mm under a specific load. The temperature reflects the point of softening expected when a material is used in an elevated temperature application. It is taken as the temperature at which the specimen is penetrated to a depth of 1 mm by a flat-ended needle with a 1 mm² circular or square cross-section. For the Vicat A test, a load of 10 N is used, whereas for the Vicat B test, the load is 50 N. The test involves placing a test specimen in the testing apparatus so that the penetrating needle rests on its surface at least 1 mm from the edge. A load is applied to the specimen per the requirements of the Vicat A or Vicate B test. The specimen is then lowered into an oil bath at 23 °C. The bath is raised at a rate of 50 °C or 120 °C per hour until the needle penetrates 1 mm. The test specimen must be between 3 and 6.5 mm thick and at least 10 mm in width and length. No more than three layers can be stacked to achieve minimum thickness.

### Method to Determine the Melting Temperature, Tₘ, and Glass Transition Temperature, T_{g}.

The melting temperature Tₘ and glass transition temperature T_{g} are determined using a commercially available Differential Scanning Calorimeter ("DSC") in accordance with AS Tₘ D3418-97. Briefly, a 10-15 gram sample is placed into an aluminum DSC pan and then the lead was sealed with the crimper press. The DSC is configured to scan from -100°C to 225°C with a 20 °C/minute heating rate, hold at 225°C for 2 minutes, and then cool down to 25°C at a rate of - 10 °C/minute. The DSC curve created from this scan is then analyzed using standard techniques to determine the glass transition temperature T_{g} and the melting temperature Tₘ.

### Method to Determine the Melt Flow Index.

The melt flow index is determined according to the test method detailed in AS Tₘ D1238-13 Standard Test Method for Melt Flow Rates of Thermoplastics by Extrusion Plastometer, using Procedure A described therein. Briefly, the melt flow index measures the rate of extrusion of thermoplastics through an orifice at a prescribed temperature and load. In the test method, approximately 7 grams of the material is loaded into the barrel of the melt flow apparatus, which has been heated to a temperature specified for the material. A weight specified for the material is applied to a plunger and the molten material is forced through the die. A timed extrudate is collected and weighed. Melt flow rate values are calculated in g/10 min.

### Method to Determine the Modulus (plaque).

The modulus for a thermoformed plaque of material is determined according to the test method detailed in AS Tₘ D412-98 Standard Test Methods for Vulcanized Rubber and Thermoplastic Rubbers and Thermoplastic Elastomers-Tension, with the following modifications. The sample dimension is the AS TₘD412-98 Die C, and the sample thickness used is 2.0 millimeters +/- 0.5 millimeters. The grip type used is a pneumatic grip with a metal serrated grip face. The grip distance used is 75 millimeters. The loading rate used is 500 millimeters/minute. The modulus (initial) is calculated by taking the slope of the stress (MPa) versus the strain in the initial linear region.

### Method to Determine the Modulus (yarn).

The modulus for a yarn is determined according to the test method detailed in EN ISO 2062 (Textiles-Yarns from Packages) - Determination of Single-End Breaking Force and Elongation at Break Using Constant Rate of Extension (CRE) Tester, with the following modifications. The sample length used is 600 millimeters. The equipment used is an Instron and Gotech Fixture. The grip distance used is 250 millimeters. The pre-loading is set to 5 grams and the loading rate used is 250 millimeters/minute. The first meter of yarn is thrown away to avoid using damaged yarn. The modulus (initial) is calculated by taking the slope of the stress (MPa) versus the strain in the initial linear region.

### Method to Determine Tenacity and Elongation.

The tenacity and elongation of yarn can be determined according to the test method detailed in EN ISO 2062 Determination of single end breaking force and elongation at break using constant rate of extension tester with the pre-load set to 5 grams.

### Method to Determine Shrinkage.

The free-standing shrinkage of fibers and/or yarns can be determined by the following method. A sample fiber or yarn is cut to a length of approximately 30 millimeters with minimal tension at approximately room temperature (e.g., 20 °C). The cut sample is placed in a 50 °C or 70 °C oven for 90 seconds. The sample is removed from the oven and measured. The percentage of shrink is calculated using the pre-and post-oven measurements of the sample, by dividing the post-oven measurement by the pre-oven measurement, and multiplying by 100.

### Method to Determine Enthalpy of Melting.

The enthalpy of melting is determined by the following method. A 5-10 mg sample of fibers or yarn is weighed to determine the sample mass is placed into an aluminum DSC pan, and then the lid of the DSC pan is sealed using a crimper press. The DSC is configured to scan from -100 °C to 225 °C with a 20 °C/minute heating rate, hold at 225°C for 2 minutes, and then cool down to room temperature (*e.g*., 25 °C) at a rate of -10 °C/minute. The enthalpy of melting is calculated by integrating the area of the melting endotherm peak and normalizing by the sample mass.

### Coefficient of Friction Test

This test measures the coefficient of friction of the Coefficient of Friction Test for a sample (e.g., taken with the above-discussed Footwear Sampling Procedure, Co-extruded Film Sampling Procedure, or the Neat Film Sampling Procedure). For a dry test (i.e., to determine a dry-state coefficient of friction), the sample is initially equilibrated at 25 degree C and 20% humidity for 24 hours. For a wet test (i.e., to determine a wet-state coefficient of friction), the sample is fully immersed in a deionized water bath maintained at 25 degree C for 24 hours. After that, the sample is removed from the bath and blotted with a cloth to remove surface water.

The measurement is performed with an aluminum sled mounted on an aluminum test track, which is used to perform a sliding friction test for test sample on an aluminum surface of the test track. The test track measures 127 millimeters wide by 610 millimeters long. The aluminum sled measures 76.2 millimeters x 76.2 millimeters, with a 9.5 millimeter radius cut into the leading edge. The contact area of the aluminum sled with the track is 76.2 millimetersx66.6 millimeters, or 5,100 square millimeters).

The dry or wet sample is attached to the bottom of the sled using a room temperature-curing two-part epoxy adhesive commercially available under the tradename "LOCTITE 608" from Henkel, Dusseldorf, Germany. The adhesive is used to maintain the planarity of the wet sample, which can curl when saturated. A polystyrene foam having a thickness of about 25.4 millimeters is attached to the top surface of the sled (opposite of the test sample) for structural support.

The sliding friction test is conducted using a screw-driven load frame. A tow cable is attached to the sled with a mount supported in the polystyrene foam structural support, and is wrapped around a pulley to drag the sled across the aluminum test track. The sliding or frictional force is measured using a load transducer with a capacity of 2,000 Newtons. The normal force is controlled by placing weights on top of the aluminum sled, supported by the polystyrene foam structural support, for a total sled weight of 20.9 kilograms (205 Newtons). The crosshead of the test frame is increased at a rate of 5 millimeters/second, and the total test displacement is 250 millimeters. The coefficient of friction is calculated based on the steady-state force parallel to the direction of movement required to pull the sled at constant velocity. The coefficient of friction itself is found by dividing the steady-state pull force by the applied normal force. Any transient value relating static coefficient of friction at the start of the test is ignored.

### Glass Transition Temperature Test

This test measures the glass transition temperature (T_{g}) of the outsole film for a sample, where the outsole film is provided in neat form, such as with the Neat Film Sampling Procedure or the Neat Material Sampling Procedure, with a 10-milligram sample weight. The sample is measured in both a dry state and a wet state (i.e., after exposure to a humid environment as described herein).

The glass transition temperature is determined with DMA using a DMA analyzer, for example a DMA analyzer commercially available under the tradename "Q2000 DMA ANALYZER" from TA Instruments, New Castle, Del., which is equipped with aluminum hermetic pans with pinhole lids, and the sample chamber is purged with 50 milliliters/minute of nitrogen gas during analysis. Samples in the dry state are prepared by holding at 0% RH until constant weight (less than 0.01% weight change over 120 minute period). Samples in the wet state are prepared by conditioning at a constant 25 degree C according to the following time/relative humidity (RH) profile: (i) 250 minutes at 0% RH, (ii) 250 minutes at 50% RH, and (iii) 1,440 minutes at 90% RH. Step (iii) of the conditioning program can be terminated early if sample weight is measured during conditioning and is measured to be substantially constant within 0.05% during an interval of 100 minutes.

After the sample is prepared in either the dry or wet state, it is analyzed by DSC to provide a heat flow versus temperature curve. The DSC analysis is performed with the following time/temperature profile: (i) equilibrate at -90 degree C for 2 minutes, (ii) ramp at +10 degree C/minute to 250 degree C, (iii) ramp at -50 degree C/minute to -90 degree C, and (iv) ramp at +10 degree C/minute to 250 degree C. The glass transition temperature value (in Celsius) is determined from the DSC curve according to standard DSC techniques.

### Measurement for residual strain

ASTM D638 Type I "dogbone-shaped" or "dumbbell-shaped" specimens are obtained for the coating layer and the textile layer. Each specimen for ASTM D638 have a 50 mm gauge length. The specimens are tested using an ADMET universal testing frame. The dogbone specimens are loaded into vice-grips, with a load cell between one of the grips and the crosshead of the ADMET universal testing frame (ADMET Inc., Norwood MA). The ADMET universal testing frame records the force and crosshead displacement during the test. The engineering stress is calculated from the load and cross-sectional area of the gauge section of the specimen. During the test, a camera records a series of images (typically 10-20 frames per second). A Digital Image Correlation (DIC) is used so that a series of images is used to calculate the strain in the gauge region of the specimen. The commercial DIC software is VIC-2D^{TM} system (Correlated Solutions, Irmo, South Carolina).

A Python script will be used to identify the peaks and valleys of the stress vs time and strain vs time data. The residual strain is calculated as the strain at each valley. There's a small offset applied to account for each valley representing 1N of force rather than 0N (the specimens need to retain a small amount of tension for the VIC-2D^{™} system to work properly). This offset strain has been very small.

The cyclic tests on substrates are done using maximum loads of every 5 N from 5-50 N (i.e. 5, 10, 15...50). The substrates are tested at maximum nominal strains every 5% from 5%-50%. Nominal strain is approximated before the test but the strain isn't monitored in real-time so the actual strains applied are calculated after the test is over. The nominal strain is less accurate than the calculated strain from VIC-2D^{™} system, so the data is based on VIC-2D^{™} system results.

The following provides the cyclic loading test protocol. A: Punch out 5 ASTM D638 Type I dogbone specimens for each of the coating layer and the textile layer to be tested. B: Increase the extension of the specimen at 0.57 mm/s until the load is 5 N. C: Decrease the extension at 0.57 mm/s until the load is 1 N. D: Increase the extension of the specimen at 0.57 mm/s until the load is 10 N. E: Increase the extension of the specimen at 0.57 mm/s until the load is 15 N. F: Decrease the extension at 0.57 mm/s until the load is 1 N. G: Increase the extension of the specimen at 0.57 mm/s until the load is 15 N. H: Decrease the extension at 0.57 mm/s until the load is 1 N. I: Increase the extension of the specimen at 0.57 mm/s until the load is 20 N. J: Decrease the extension at 0.57 mm/s until the load is 1 N.

The following table provides exemplary data for the residual strain and the melt flow index (described above) for the of the coating layer and the textile layer.

### Coating Layer: Properties

| Residual strain of film layer | Less than 3% at an applied strain of 10% | Less than 3% at an applied strain of 10% |
|---|---|---|
| Melt Flow Index | 0.5-25 | 2-15 |

### Textile Layer: Properties

| | | |
|---|---|---|
| Residual strain* of the base layer in a cyclic test with a max load of 50N | less than 0.15 (M) | < 0.15 (M) |
| | less than 0.6 (T) | < 0.5 (T) |

It should be noted that ratios, concentrations, amounts, and other numerical data can be expressed herein in a range format. Where the stated range includes one or both of the limits, ranges excluding either or both of those included limits are also included in the disclosure, e.g. the phrase "x to y" includes the range from 'x' to 'y' as well as the range greater than 'x' and less than `y'. The range can also be expressed as an upper limit, e.g. 'about x, y, z, or less' and should be interpreted to include the specific ranges of 'about x', 'about y', and 'about z' as well as the ranges of 'less than x', less than y', and 'less than z'. Likewise, the phrase 'about x, y, z, or greater' should be interpreted to include the specific ranges of 'about x', 'about y', and 'about z' as well as the ranges of 'greater than x', greater than y', and 'greater than z'. In addition, the phrase "about `x' to 'y''', where `x' and `y' are numerical values, includes "about `x' to about 'y'''. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "about 0.1% to 5%" should be interpreted to include not only the explicitly recited values of about 0.1% to about 5%, but also include individual values (e.g., 1%, 2%, 3%, and 4%) and the sub-ranges (e.g., 0.5%, 1.1%, 2.4%, 3.2%, and 4.4%) within the indicated range.

## Claims

1. A composite textile (200; 300) for an article of apparel, sporting equipment, or footwear (110) comprising:
a coating layer (220; 320) including a coating mixture, the coating layer (220; 320) having a first side and a second side opposing the first side, the coating mixture comprising a polyolefin resin and a thermoplastic vulcanizate (TPV), wherein the TPV comprises a cured rubber dispersed in a thermoplastic resin, wherein the coating mixture comprises 80 weight percent to 50 weight percent of the polyolefin resin and 5 weight percent to 45 weight percent of the TPV; and
a textile layer (210; 310) including a first textile, the texture layer having a first side and a second side opposing the first side;
wherein, in the composite textile (200; 300), the second side of the coating layer (220; 320) and the first side of the textile layer (210; 310) are directly bonded to each other or are indirectly bonded to each other *via* one or more intermediate layers;
wherein the first textile of the textile layer (210; 310) is a non-woven textile and/or wherein the composite textile (200; 300) is a synthetic leather.

2. The composite textile (200; 300) of claim 1, wherein the polyolefin resin of the coating mixture includes an alpha-olefin polymer or an alpha-olefin copolymer.

3. The composite textile (200; 300) of claim 1 or claim 2, wherein the coating layer (220; 320) or the coating mixture or both have a percent crystallization of 45% or less when measured according to the Differential Scanning Calorimeter Test using the Material Sampling Procedure.

4. The composite textile (200; 300) of claim 1 or claim 2, wherein the polyolefin resin is miscible with polypropylene.

5. The composite textile (200; 300) of claim 1, wherein the thermoplastic resin of the TPV includes a thermoplastic polyolefin resin.

6. The composite textile (200; 300) of claim 5, wherein the cured rubber of the TPV includes a cured polyolefin rubber.

7. The composite textile (200; 300) of claims 1-6, wherein the TPV is free of hygroscopic fillers, pigments, or both hygroscopic fillers and pigments; or wherein the coating mixture is free of fillers, or is free of pigments, or is free of both fillers and pigments.

8. The composite textile (200; 300) of claims 1-7, wherein a thickness of the coating layer (220; 320) is 100-400 microns, or 300-400 microns.

9. The composite textile (200; 300) of claims 1-8, wherein a thickness of the composite textile (200; 300) is 0.8 millimeters to 2.5 millimeters.

10. The composite textile (200; 300) of claims 1-9, wherein the composite textile (200; 300) includes a hot melt adhesive layer having a first side and a second side opposing the first side, the second side of the coating layer (220; 320) is bonded directly to the first side of the hot melt adhesive layer, and the second side of the hot melt adhesive layer is bonded directly to the first side of the textile layer (210; 310).

11. The composite textile (200; 300) of claims 1-10, wherein the first side of the coating layer (220; 320) is an outer layer of the composite textile (200; 300).

12. An article of apparel, sporting equipment, or footwear (110) comprising a composite textile (200; 300) according to any one of claims 1 to 11.

13. A method of manufacturing a composite textile (200; 300) for an article of apparel, sporting equipment, or footwear (110), the method comprising:
bonding a coating layer (220; 320) to a textile layer (210; 310) to form the composite textile (200; 300);
wherein the coating layer (220; 320) has a first side and a second side opposing the first side, the textile layer (210; 310) has a first side and a second side opposing the first side, and wherein the second side of the coating layer (220; 320) and the first side of the textile layer (210; 310) are bonded directly to each other or are indirectly bonded to each other via one or more intermediate layers;
wherein the first textile of the textile layer (210; 310) is a non-woven textile and/or wherein the composite textile (200; 300) is a synthetic leather; and
wherein the coating mixture comprises a polyolefin resin and a thermoplastic vulcanizate (TPV), wherein the coating mixture comprises 80 weight percent to 50 weight percent of the polyolefin resin and 5 weight percent to 45 weight percent of the TPV, wherein the TPV comprises a cured rubber dispersed in a thermoplastic resin.

14. The method of claim 13, wherein the first coating layer (220; 320) includes a film comprising the coating mixture, and the step of bonding the coating layer (220; 320) to the textile layer (210; 310) comprises disposing the film on the textile, and applying heat and pressure to the combination of the film and the textile.

15. The method of claim 13, wherein the step of bonding the coating layer (220; 320) to the textile layer (210; 310) comprises applying a liquid coating composition to the textile, and solidifying the liquid coating composition, thereby forming the coating layer (220; 320) comprising the coating mixture.

## Patentansprüche

1. Verbundtextil (200; 300) für einen Bekleidungs-, Sportausrüstungs- oder Fußbekleidungsartikel (110), mit:
einer Deckschicht (220; 320) mit einer Deckmischung, die eine erste Seite und eine zweite Seite gegenüber der ersten Seite aufweist, welche Deckmischung ein Polyolefinharz und ein thermoplastisches Vulkanisat (TPV) aufweist, bei der das TPV einen gehärteten Kautschuk, der in einem thermoplastischen Harz dispergiert ist, aufweist, bei der die Deckmischung 80 Gewichtsprozent bis 50 Gewichtsprozent des Polyolefinharzes und 5 Gewichtsprozent bis 45 Gewichtsprozent des TPV aufweist, und
einer Textilschicht (210; 310) mit einem ersten Textil, die eine erste Seite und eine zweite Seite gegenüber der ersten Seite aufweist,
bei dem in dem Verbundtextil (200; 300) die zweite Seite der Deckschicht (220; 320) und die erste Seite der Textilschicht (210; 310) direkt miteinander verbunden sind oder über eine oder mehrere Zwischenschichten indirekt miteinander verbunden sind;
bei dem das erste Textil der Textilschicht (210; 310) ein ungewobenes Textil ist und/oder bei dem das Verbundtextil (200; 300) ein synthetisches Leder ist.

2. Verbundtextil (200; 300) nach Anspruch 1, bei dem das Polyolefinharz der Deckmischung ein Alpha-Olefin-Polymer oder ein Alpha-Olefin-Copolymer aufweist.

3. Verbundtextil (200; 300) nach Anspruch 1 oder Anspruch 2, bei dem die Deckschicht (220; 320) oder die Deckmischung oder beide eine prozentuale Kristallisation von 45 % oder weniger aufweisen, wenn sie gemäß dem Differentialkalorimetertest unter Verwendung des Materialprobenverfahrens gemessen wird.

4. Verbundtextil (200; 300) nach Anspruch 1 oder Anspruch 2, bei dem das Polyolefinharz mit Polypropylen mischbar ist.

5. Verbundtextil (200; 300) nach Anspruch 1, bei dem das thermoplastische Harz des TPV ein thermoplastisches Polyolefinharz umfasst.

6. Verbundtextil (200; 300) nach Anspruch 5, bei dem der gehärtete Kautschuk des TPV einen gehärteten Polyolefinkautschuk umfasst.

7. Verbundtextil (200; 300) nach Ansprüchen 1-6, bei dem das TPV frei von hygroskopischen Füllstoffen, Pigmenten oder sowohl hygroskopischen Füllstoffen als auch Pigmenten ist; oder bei dem die Deckmischung frei von Füllstoffen ist oder frei von Pigmenten ist oder frei von sowohl Füllstoffen als auch Pigmenten ist.

8. Verbundtextil (200; 300) nach Ansprüchen 1-7, bei dem eine Dicke der Deckschicht (220; 320) 100-400 Mikron oder 300-400 Mikron ist.

9. Verbundtextil (200; 300) nach Ansprüchen 1-8, bei dem eine Dicke des Verbundtextils (200; 300) 0,8 Milimter bis 2,5 Milimeter ist.

10. Verbundtextil (200; 300) nach Ansprüchen 1-9, bei dem das Verbundtextil (200; 300) eine Heißschmelzklebstoffschicht mit einer ersten Seite und einer zweiten Seite gegenüber der ersten Seite aufweist, die zweite Seite der Deckschicht (220; 320) direkt mit der ersten Seite der Heißschmelzklebstoffschicht verbunden ist, und die zweite Seite der Heißschmelzklebstoffschicht direkt mit der ersten Seite der Textilschicht (210; 310) verbunden ist.

11. Verbundtextil (200; 300) nach Ansprüchen 1-10, bei dem die erste Seite der Deckschicht (220; 320) eine äußere Schicht des Verbundtextils (200; 300) ist.

12. Bekleidungs-, Sportausrüstungs- oder Fußbekleidungsartikel (110) mit einem Verbundtextil (200; 300) nach einem der Ansprüche 1 bis 11.

13. Verfahren zum Herstellen eines Verbundtextils (200; 300) für einen Bekleidungs-, Sportausrüstungs- oder Fußbekleidungsartikel (110), mit:
Verbinden einer Deckschicht (220; 320) mit einer Textilschicht (210; 310) zum Ausbilden des Verbundtextils (200; 300);
bei dem die Deckschicht (220; 320) eine erste Seite und eine zweite Seite gegenüber der ersten Seite aufweist, die Textilschicht (210; 310) eine erste Seite und eine zweite Seite gegenüber der ersten Seite aufweist, und bei dem die zweite Seite der Deckschicht (220; 320) und die erste Seite der Textilschicht (210; 310) direkt miteinander verbunden werden oder über eine oder mehrere Zwischenschichten indirekt miteinander verbunden werden;
bei dem das erste Textil der Textilschicht (210; 310) ein ungewobenes Textil ist und/oder bei dem das Verbundtextil (200; 300) ein synthetisches Leder ist; und
bei dem die Deckmischung ein Polyolefinharz und ein thermoplastisches Vulkanisat (TPV) aufweist, bei dem die Deckmischung 80 Gewichtsprozent bis 50 Gewichtsprozent des Polyolefinharzes und 5 Gewichtsprozent bis 45 Gewichtsprozent des TPV aufweist, bei dem das TPV einen gehärteten Kautschuk, der in einem thermoplastischen Harz dispergiert ist, aufweist.

14. Verfahren nach Anspruch 13, bei dem die erste Deckschicht (220; 320) eine Folie mit der Deckmischung aufweist, und der Schritt zum Verbinden der Deckschicht (220; 320) mit der Textilschicht (210; 310) ein Anordnen der Folie auf dem Textil und ein Ausüben von Wärme und Druck auf die Kombination der Folie und des Textils umfasst.

15. Verfahren nach Anspruch 13, bei dem der Schritt zum Verbinden der Deckschicht (220; 320) mit der Textilschicht (210; 310) ein Auftragen einer flüssigen Deckzusammensetzung auf das Textil und ein Verfestigen der flüssigen Deckzusammensetzung, so dass die Deckschicht (220; 320) mit der Deckmischung ausgebildet wird, umfasst.

## Revendications

1. Textile composite (200 ; 300) pour un article de vêtement, d'équipement sportif ou de chaussure (110), comprenant :
une couche de revêtement (220 ; 320) incluant un mélange de revêtement, la couche de revêtement (220 ; 320) présentant un premier côté et un second côté opposé au premier côté, le mélange de revêtement comprenant une résine de polyoléfine et un vulcanisat thermoplastique (TPV), dans lequel le TPV comprend un caoutchouc durci dispersé dans une résine thermoplastique, dans lequel le mélange de revêtement comprend 80 % en poids à 50 % en poids de la résine de polyoléfine et 5 % en poids à 45 % en poids du TPV ; et
une couche de textile (210 ; 310) incluant un premier textile, la couche de texture présentant un premier côté et un second côté opposé au premier côté ;
dans lequel, dans le textile composite (200 ; 300), le second côté de la couche de revêtement (220 ; 320) et le premier côté de la couche de textile (210 ; 310) sont liés directement l'un à l'autre ou sont liés indirectement l'un à l'autre via une ou plusieurs couches intermédiaires ;
dans lequel le premier textile de la couche de textile (210 ; 310) est un textile non tissé et/ou dans lequel le textile composite (200 ; 300) est un cuir synthétique.

2. Textile composite (200 ; 300) selon la revendication 1, dans lequel la résine de polyoléfine du mélange de revêtement inclut un polymère d'alpha-oléfine ou un copolymère d'alpha-oléfine.

3. Textile composite (200 ; 300) selon la revendication 1 ou la revendication 2, dans lequel la couche de revêtement (220 ; 320) ou le mélange de revêtement ou les deux présentent un pourcentage de cristallisation de 45 % ou moins lorsqu'il est mesuré selon le test du calorimètre à balayage différentiel en utilisant la procédure d'échantillonnage de matériau.

4. Textile composite (200 ; 300) selon la revendication 1 ou la revendication 2, dans lequel la résine de polyoléfine est miscible avec du polypropylène.

5. Textile composite (200 ; 300) selon la revendication 1, dans lequel la résine thermoplastique du TPV inclut une résine de polyoléfine thermoplastique.

6. Textile composite (200 ; 300) selon la revendication 5, dans lequel le caoutchouc durci du TPV inclut un caoutchouc de polyoléfine durci.

7. Textile composite (200 ; 300) selon les revendications 1 à 6, dans lequel le TPV est exempt de charges hygroscopiques, de pigments, ou à la fois de charges hygroscopiques et de pigments ; ou dans lequel le mélange de revêtement est exempt de charges, ou est exempt de pigments, ou est exempt de charges et de pigments.

8. Textile composite (200 ; 300) selon les revendications 1 à 7, dans lequel une épaisseur de la couche de revêtement (220 ; 320) est de 100 à 400 microns, ou de 300 à 400 microns.

9. Textile composite (200 ; 300) selon les revendications 1 à 8, dans lequel une épaisseur du textile composite (200 ; 300) est de 0,8 millimètre à 2,5 millimètres.

10. Textile composite (200 ; 300) selon les revendications 1 à 9, dans lequel le textile composite (200 ; 300) inclut une couche d'adhésif thermofusible présentant un premier côté et un second côté opposé au premier côté, le second côté de la couche de revêtement (220 ; 320) est lié directement au premier côté de la couche d'adhésif thermofusible, et le second côté de la couche d'adhésif thermofusible est lié directement au premier côté de la couche de textile (210 ; 310).

11. Textile composite (200 ; 300) selon les revendications 1 à 10, dans lequel le premier côté de la couche de revêtement (220 ; 320) est une couche extérieure du textile composite (200 ; 300).

12. Article de vêtement, d'équipement sportif ou de chaussure (110) comprenant un textile composite (200 ; 300) selon l'une quelconque des revendications 1 à 11.

13. Procédé de fabrication d'un textile composite (200 ; 300) pour un article de vêtement, d'équipement sportif ou de chaussure (110), le procédé comprenant les étapes consistant à :
lier une couche de revêtement (220 ; 320) à une couche de textile (210 ; 310) pour former le textile composite (200 ; 300) ;
dans lequel la couche de revêtement (220 ; 320) présente un premier côté et un second côté opposé au premier côté, la couche de textile (210 ; 310) présente un premier côté et un second côté opposé au premier côté, et dans lequel le second côté de la couche de revêtement (220 ; 320) et le premier côté de la couche de textile (210 ; 310) sont liés directement l'un à l'autre ou sont liés indirectement l'un à l'autre via une ou plusieurs couches intermédiaires ;
dans lequel le premier textile de la couche de textile (210 ; 310) est un textile non tissé et/ou dans lequel le textile composite (200 ; 300) est un cuir synthétique ; et
dans lequel le mélange de revêtement comprend une résine de polyoléfine et un vulcanisat thermoplastique (TPV), dans lequel le mélange de revêtement comprend 80 % en poids à 50 % en poids de la résine de polyoléfine et 5 % en poids à 45 % en poids du TPV, dans lequel le TPV comprend un caoutchouc durci dispersé dans une résine thermoplastique.

14. Procédé selon la revendication 13, dans lequel la première couche de revêtement (220 ; 320) inclut un film comprenant le mélange de revêtement, et l'étape de liaison de la couche de revêtement (220 ; 320) à la couche de textile (210 ; 310) comprend les étapes consistant à disposer le film sur le textile, et à appliquer de la chaleur et une pression à la combinaison du film et du textile.

15. Procédé selon la revendication 13, dans lequel l'étape de liaison de la couche de revêtement (220 ; 320) à la couche de textile (210 ; 310) comprend les étapes consistant à appliquer une composition de revêtement liquide sur le textile, et à solidifier la composition de revêtement liquide, en formant ainsi la couche de revêtement (220 ; 320) comprenant le mélange de revêtement.
